(19) Europäisches Patentamt
European Patent Office
Office européen des brevets

(11) **EP 4 007 293 A1**

(12) **EUROPÄISCHE PATENTANMELDUNG**

(43) Veröffentlichungstag:
**01.06.2022   Patentblatt 2022/22**

(21) Anmeldenummer: **20209835.6**

(22) Anmeldetag: **25.11.2020**

(51) Internationale Patentklassifikation (IPC):
*H04Q 11/00* (2006.01)          *H04L 12/24* (2006.01)

(52) Gemeinsame Patentklassifikation (CPC):
**H04Q 11/0005; H04L 41/12; H04Q 11/0062;**
H04Q 2011/0016; H04Q 2011/0018;
H04Q 2011/0058; H04Q 2011/0086

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Deutsche Telekom AG
53113 Bonn (DE)**

(72) Erfinder:
• **BRAUN, Ralf-Peter
12305 Berlin (DE)**
• **GEITZ, Marc
58089 Hagen (DE)**

(74) Vertreter: **Brandt & Nern Patentanwälte
Kekuléstrasse 2-4
12489 Berlin (DE)**

(54)   **FLEXIBILISIERUNG OPTISCHER KOMMUNIKATIONSNETZE**

(57)   Die Erfindung betrifft eine Lösung zur Flexibilisierung eines optischen Transport-Netzwerks OTN (1), in welchem Daten zwischen den Netzwerkknoten ($2_1$, 22, ..., 2n) mit jeweils einem, über Line-Ports (51, 52, ..., 5n) verfügenden IP Router/Switch (4) mittels eines NxN Arrayed Waveguide Grating AWG (3) durch transparentes optisches Routing (TOR) Ende-zu-Ende übertragen werden, wobei sie zwischen dem AWG (3) und den Netzwerkknoten ($2_1$, $2_2$, ..., $2_n$) jeweils über einen MUX/DEMUX (6) übertragen werden. Erfindungsgemäß wird das Netzwerkmanagement mit einer Software ausgestattet, mittels welcher das OTN (1) ohne Veränderungen seiner physischen Topologie rekonfigurierbar und optimierbar ist. Von der Software werden für jeden Netzwerkknoten ($2_1$, $2_2$, ..., $2_n$) jeweils die in der Upstream-Richtung sowie die in der Downstream-Richtung zu verwendenden Transponder/Transceiver des IP Routers/Switches (4) ausgewählt und eine je Übertragungsrichtung zwischen dem IP-Router/Switch (4) und dem MUX/DEMUX (6) eingefügte NxN optische Switchmatrix (7, 7') dazu angesteuert, die Line-Ports ($5_1$, $5_2$, ..., 5n) jeweils mit dem, in Bezug auf das von ihm unterstützte Frequenzband, richtigen Port des MUX/DEMUX (6) zu verbinden.

Fig. 1

**Beschreibung**

Die Erfindung betrifft eine Lösung zur Flexibilisierung optischer Kommunikationsnetze. Gegenstände der Erfindung sind ein entsprechendes Verfahren und ein zu dessen Durchführung in geeigneter Weise ausgebildetes Kommunikationsnetz. Bei diesem Kommunikationsnetz handelt es sich um ein TOR-OTN, nämlich um ein optisches Transport-Netzwerk (OTN = Optical Transport Network), in welchem Daten durch transparentes optisches Routing (TOR = Transparent Optically Routed) zwischen Netzwerkknoten Ende-zu-Ende optisch transparent übertragen werden. Die Flexibilisierung eines entsprechenden Netzwerks bezieht sich hierbei auf die Möglichkeiten seiner Optimierung hinsichtlich unterschiedlicher Gesichtspunkte sowie auf die im Bedarfsfall für eine Rekonfiguration eines solchen Kommunikationsnetzes bestehenden Möglichkeiten.

Derzeit bestehende optische Transportnetzwerke (auch OTN = Optical Transport Network) sind typischerweise hinsichtlich ihrer physischen Topologie zumeist als teilvermaschte Netze ausgebildet. Aufgrund der starren Faser-Netzwerk-Topologie solcher Kommunikationsnetze ist es dabei schwierig, aber jedenfalls verhältnismäßig aufwendig, diese an sich verändernde Gegebenheiten anzupassen, sie beispielsweise im Falle einer notwendig werdenden Erweiterung im Hinblick auf das Hinzutreten neuer Netzwerkknoten oder eine Bereitstellung neuer Verbindungen zu rekonfigurieren und/oder sie unter Berücksichtigung sich ändernder Datenverkehre oder sonstiger Erfordernisse zu optimieren, da die physische Topologie nicht verändert werden kann. Letzteres gilt selbstverständlich in besonderem Maße hinsichtlich der grundsätzlich wünschenswerten Möglichkeit, eventuell sogar auf tageszeitabhängige Veränderungen reagieren zu können.

Zudem besteht typischerweise auch in teilvermaschten Netzwerken die Notwendigkeit, Ende-zu-Ende-Verbindungen zwischen einzelnen, untereinander nicht direkt verbunden Netzwerkknoten des Netzwerks zu ermöglichen. Dem wird in Netzwerken mit einer teilvermaschten physischen Topologie beispielsweise dadurch Rechnung getragen, dass entsprechende Ende-zu-Ende-Verbindungen mit Hilfe von sogenannten Multi-Hop-Verbindungen realisiert werden. Hierbei werden die zwischen zwei Netzwerkknoten zu übertragenden Daten über einen oder mehrere, als Transitknoten fungierende Netzwerkknoten übertragen, wobei dies entweder über die IP Ebene (inklusive optisch-elektrisch-optischer Wandlung) oder über die optische Ebene durch Weiterleitung der genutzten Wellenlänge des optischen Kanals geschieht. In beiden Fällen entstehen jedoch innerhalb des OTN zusätzliche Abhängigkeiten, die es zu berücksichtigen gilt.

Die zwischen solchen Transitknoten und anderen Netzwerkknoten des Kommunikationsnetzes bestehenden Links (Verbindungen) werden mit zusätzlichen, durch die Transitfunktion bedingten Datenverkehren belastet. Je nachdem, in welchem OSI-Layer die Durchschaltung entsprechender Datenverkehre in einem Transitknoten erfolgt, werden außerdem in einem Transitknoten zusätzliche IP-Kapazitäten erforderlich und gegebenenfalls in dem optischen Kommunikationsnetzwerk (OTN) unterschiedliche Ressourcen zusätzlich gebunden.

So müssen zum Beispiel bei einer auf dem optischen Layer 1 über einen Transitknoten geführten Ende-zu-Ende-Verbindung zwischen zwei Netzwerkknoten seitens des Transitknotens hierfür Ressourcen, wie beispielsweise ein rekonfigurierbarer optischer Add/Drop Multiplexer (ROADM = Reconfigurable Optical Add Drop Multiplexer) oder eines aktiven Optical Cross-Connect (OXC), bereitgestellt werden. Wird andererseits eine solche Ende-zu-Ende-Verbindung zwischen zwei Netzwerkknoten unter Einbeziehung eines Transitknotens auf den Layern 2 oder 3 bewerkstelligt, so werden dadurch in dem Transitknoten Ressourcen wie Ethernet Switches oder IP/MPLS-Router zusätzlich gebunden, wobei die jeweiligen optischen Verbindungen zwischen den Ende-zu-Ende miteinander zu verbindenden Netzwerkknoten und dem Transitknoten zudem in dem Transitknoten jeweils terminiert werden müssen und die Signale dabei innerhalb des Transitknotens zusätzliche "oeo"- (optisch-elektrisch-optisch) Konversionen durchlaufen.

Gemäß den vorstehenden Darstellungen werden demnach je nach der Art der in einem oder gegebenenfalls in mehreren Transitknoten gewählten Durchschaltung zusätzliches Equipment (ROADMs, Ports, Transponder/Transceiver) als auch zusätzliche Kapazitäten bereits vorhandenen Equipments benötigt, nämlich zum Beispiel Kapazitäten, betreffend zusätzliche, hinsichtlich der Wellenlänge des Trägersignals unterschiedliche Übertragungskanäle auf der optischen Ebene oder auch entsprechende Ports von Netzwerkelementen auf der Router/Switch-Ebene.

Wie aber bereits ausgeführt, werden jedoch auch in teilvermaschten Netzen zwangsläufig Ende-zu-Ende-Verbindungen zwischen Netzwerkknoten benötigt, welche optisch nicht direkt miteinander verbunden sind. Die Steuerung der verschiedenen, beispielsweise auch durch Einbeziehung von Transitknoten zur Realisierung von Ende-zu-Ende-Verbindungen auf den verschiedenen Layern entstehenden Verkehre ist dabei sehr komplex. Entsprechendes gilt erst recht für eine Optimierung dieser Verkehre unter Gesichtspunkten wie Übertragungskosten, benötigter Bandbreite, spektraler Effizienz (Kapazität - Längen Trade Off), das heißt Übertragungskapazität pro optischer Bandbreite oder einer maximal zulässigen Latency mit gegebenenfalls unterschiedlichen Anforderungen für verschiedene Verbindungen.

Zur Lösung der sich hierbei ergebenden komplexen Probleme ist der Einsatz von Methoden der höheren Mathematik erforderlich. Für eine Optimierung eines OTN auf der optischen Ebene (Layer 1) und/oder auf den Layern 2/3 (Ethernet, IP oder IP/MPLS) sind dabei notwendigerweise die jeweiligen Ende-zu-Ende-Verkehre zu messen und in Origin Destination (OD) Matrizen darzustellen. Diese Verkehrsmatrizen lassen sich in Verbindung mit Adjazenz- und Kapazitätsbeziehungen dann für eine Optimierung des OTN nutzen.

Ungeachtet dessen ist es jedoch bei der Umsetzung entsprechender Optimierungsmaßnahmen aufgrund der physisch starren Topologie bestehender Netzwerke immer auch erforderlich, dazu notwendige Änderungen an der Topologie vor Ort, das heißt durch den kostenintensiven Einsatz von Außendienstmitarbeitern, vorzunehmen. Entsprechendes gilt für den Fall, dass sich beispielsweise, aufgrund notwendiger Kapazitätserweiterungen durch Bereitstellung weiterer Komponenten in Netzwerkknoten oder weiterer Verbindungen, ein Umkonfigurieren des Netzwerks im Hinblick auf die Nutzung der zur Verfügung stehenden Netzwerkressourcen und der zwischen ihnen bestehenden Netzwerkbeziehungen erforderlich macht.

In bestehenden OTN können daher zur Optimierung regelmäßig nur die optischen Wellenlängenkanäle und Verbindungen im Rahmen der bereitgestellten teilvermaschten Fasernetzwerk-Topologie angepasst werden, so dass Link-Auslastungen und Switch/Router Kapazitäten in den Knoten zwar besser verteilt, bei steigenden Verkehren entsprechend angepasst und nach Bedarf nachgerüstet werden können, aber nie ein wirklich optimaler Zustand für das gesamte OTN erreicht werden kann.

In der WO 2013/164044 A1 wird eine Lösung beschrieben, welche es auf elegante Art und Weise ermöglicht, in einem hinsichtlich seiner physischen Topologie teilvermaschten OTN zwischen beliebigen Netzwerkknoten des OTN direkte optische Ende-zu-Ende-Verbindungen zu realisieren. Die Ende-zu-Ende-Verbindungen zwischen jeweils zwei Netzwerkknoten sind dabei insoweit direkter Art, als ein Multi-Hop, also die Führung der Verbindung über einen oder mehrere Transitknoten, vermieden wird. Hierzu wird in dem OTN ein rein passives optisches Element angeordnet, über welches die jeweiligen Direktverbindungen geführt werden. Bei diesem passiven optischen Element handelt es sich um ein NxN Arrayed Waveguide Grating (NxN AWG), welches eingangsseitig über eine entsprechende Anzahl von Eingängen mit allen Netzwerkknoten des OTN optisch jeweils über eine Standard Single Mode Glasfaser-Verbindung (das heißt über je eine solche Glasfaser je Netzwerkknoten und je Übertragungsrichtung), verbunden ist und ausgangsseitig ein vollständig permutiertes optisches Frequenz-Shuffle aller optischen, in den eingangsseitig mit dem AWG verbundenen Glasfasern geführten Frequenzbänder herstellt.

Das entsprechende NxN AWG bildet dabei vorzugsweise einen Sternpunkt für das OTN aus, welcher entweder separat innerhalb des OTN oder in einem seiner Netzwerkknoten angeordnet ist. Mittels des AWG werden die von einem Netzwerkknoten des OTN zu einem anderen Netzwerkknoten desselben Netzwerks übertragenen Daten durch ein transparentes optisches Routing (TOR) Ende-zu-Ende optisch übertragen. Aber auch bei der in der genannten Druckschrift dargestellten Lösung weist das Netzwerk eine starre physische Topologie auf, so dass auch bei dieser ein eventuelles Umkonfigurieren des Netzwerks oder dessen Optimierung in Anpassung an sich verändernde Datenverkehre jeweils durch Personal vor Ort bei den Netzwerkknoten und/oder am Sternpunkt durchgeführt werden muss.

Aufgabe der Erfindung ist es, eine Lösung bereitzustellen, welche eine Flexibilisierung eines als OTN ausgebildeten Kommunikationsnetzwerks insoweit ermöglicht, als es entbehrlich wird, Personal zur Durchführung von Arbeiten vor Ort, das heißt an Netzwerkknoten des OTN oder anderen Elementen des Netzwerks, einzusetzen, sofern es aufgrund sich ändernder Erfordernisse notwendig wird, das Netzwerk umzukonfigurieren oder es erneut zu optimieren. Hierzu sind ein Verfahren anzugeben und ein zur Durchführung dieses Verfahrens geeignetes Kommunikationsnetz bereitzustellen.

Die Aufgabe wird durch ein Verfahren mit den Merkmalen des Patentanspruchs 1 gelöst. Ein die Aufgabe lösendes, zur Durchführung des Verfahrens geeignetes Kommunikationsnetz wird durch den ersten, das heißt durch den unabhängigen Sachanspruch charakterisiert. Vorteilhafte Aus- und Weiterbildungen der Erfindung sind durch die jeweiligen Unteransprüche gegeben.

Das zur Lösung der Aufgabe vorgeschlagene Verfahren zur Flexibilisierung eines Kommunikationsnetzes geht von einem Kommunikationsnetz aus, welches als ein TOR-OTN ausgebildet ist. Hierbei handelt es sich um ein optisches Transport-Netzwerk (OTN), welches mehrere Netzwerkknoten mit jeweils einem, über mehrere Line-Ports verfügenden IP-Router oder Switch und ein Netzwerkmanagement aufweist. Zwischen den Netzwerkknoten des OTN werden Daten über verschiedene, sich hinsichtlich ihrer Übertragungseigenschaften unterscheidende optische Kanäle mittels eines NxN Arrayed Waveguide Grating (NxN AWG) durch transparentes optisches Routing (TOR) jeweils Ende-zu-Ende optisch übertragen. Dabei werden die Daten zwischen dem vorgenannten NxN AWG und den, zur Bereitstellung unterschiedlicher optischer Kanäle im Wege des DWDM (DWDM = Dense Wavelength Devision Multiplexing), mit einer Mehrzahl optischer Transponder oder optischer Transceiver ausgestatteten Line-Ports des IP-Routers oder Switches eines jeweiligen Netzwerkknotens, wie bereits aus der eingangs zitierten WO 2013/164044 A1 bekannt, über einen optischen DWDM Multiplexer/Demultiplexer (im Weiteren MUX/DEMUX) übertragen. Ein solcher MUX/DEMUX ist zwischen den Line-Ports des optischen IP-Routers/Switches jedes der Netzwerkknoten und dem entfernten NxN AWG angeordnet, das heißt, jedem der Netzwerkknoten ist ein solcher MUX/DEMUX gewissermaßen zugeordnet.

Die einzelnen Ports eines jeweiligen, einem Netzwerkknoten zugeordneten und eine Mehrzahl von Ports aufweisenden MUX/DEMUX sind mit unterschiedlichen optischen Transpondern/Transceivern der Line-Ports des IP-Routers/Switches des betreffenden Netzwerkknotens verbunden. Der vorgenannte MUX/DEMUX überträgt die von einem Netzwerkknoten in der Upstream-Richtung an andere Netzwerkknoten des OTN über unterschiedliche optische Transponder der Line-Ports seines IP-Routers/Switches ausgesendeten Daten mittels eines durch den MUX/DEMUX aus den an seinen Ports eingehenden Signalen erzeugten Multiplexsignals an einen Eingangsport des entfernten NxN AWG. Die für denselben (vorgenannten) Netzwerkknoten als Zielknoten bestimmten Daten werden dem MUX/DEMUX über das NxN AWG mit einem Multiplexsignal zugeführt. Der MUX/DEMUX demultiplext dieses Signal und führt wiederum die darin enthaltenen Daten über seine einzelnen Ports (aus Sicht des Zielknotens betrachtet) in der Downstream-Richtung unterschiedlichen Transpondern der Line-Ports des IP-Routers/Switches des Zielknotens zu.

Ausgehend von einem in der zuvor beschriebenen Weise ausgebildeten TOR-OTN wird gemäß dem vorgeschlagenen Verfahren dessen Netzwerkmanagement mit einer Software ausgestattet, mittels welcher das TOR-OTN in einem automatisierten Prozess, ohne Veränderung seiner physischen Topologie, hinsichtlich der Nutzung seiner Ressourcen rekonfigurierbar sowie in Anpassung an die sich zwischen den Netzwerkknoten einstellenden Datenverkehre wiederholt optimierbar ist. Dies wird gemäß der Erfindung dadurch bewerkstelligt, dass die vorgenannte, durch Einheiten des Netzwerkmanagements ausgeführte Software

a) für jeden Netzwerkknoten des OTN jeweils den in der Upstream-Richtung zur Aussendung von Daten an einen anderen Netzwerkknoten sowie den in der Downstream-Richtung zum Empfang von Daten eines anderen Netzwerkknotens zu verwendenden Transponder des optischen IP-Routers auswählt,

b) dazu ausgebildete, zwischen einem jeweiligen Netzwerkknoten und dem zugehörigen MUX/DEMUX eingefügte Netzelemente (NxN optische Switchmatrizen, das heißt je Übertragungsrichtung eine NxN Switchmatrix) dazu ansteuert, sowohl in der Upstream-Richtung als auch in der Downstream-Richtung die Transponder des IP-Routers des jeweiligen Netzwerkknotens jeweils mit dem, in Bezug auf das von ihm unterstützte Frequenzband richtigen Port des MUX/DEMUX zu verbinden.

An dieser Stelle sei darauf hingewiesen, dass in den vorstehenden Erläuterungen, in der nachfolgenden weiteren Beschreibung der Erfindung und in den Patentansprüchen die Begriffe Arrayed Waveguide Grating und AWG synonym verwendet werden und dabei jeweils ein NxN AWG bezeichnen, auch wenn aus Gründen der sprachlichen Vereinfachung häufiger verkürzend nur von einem AWG gesprochen wird. Bei einen solchen NxN AWG handelt es sich um ein AWG mit einer, bezogen auf eine Übertragungsrichtung, gleichen Anzahl (N) von Eingängen und Ausgängen.

Ferner sei vorsorglich klargestellt, dass bezüglich beider Übertragungsrichtungen, also bezüglich der Upstream-Richtung (Übertragungsrichtung vom Netzwerkknoten zum NxN AWG) als auch bezüglich der Downstream-Richtung (Übertragungsrichtung vom NxN AWG zum jeweiligen Netzwerkknoten) eine entsprechende (erfindungsgemäß vorgesehene) NxN Switchmatrix angeordnet ist. Dies gilt auch dann, wenn in den nachfolgenden Erläuterungen teilweise vereinfachend von einer NxN Switchmatrix gesprochen werden sollte. Hierbei kann es sich um eine einzelne, eine Switchmatrix für Upstream-Richtung und eine Switchmatrix für die Downstream-Richtung aufnehmende Komponente mit einer entsprechenden Anzahl von Ports oder um zwei einzelne Komponenten für jeweils eine der beiden Übertragungsrichtungen handeln.

Die Upstream-Richtung bezeichnet aus der Sicht eines jeweiligen Netzwerkknotens die Senderichtung, also die Richtung in welcher Daten an andere Netzwercknoten ausgesendet werden, wohingegen die Downstream-Richtung die Empfangsrichtung bezeichnet, also die Übertragungsrichtung in welcher Daten anderer Netzwerkknoten an den jeweils betrachten Netzwerkknoten (selbstverständlich über das AWG) übertragen werden. Ferner sei klargestellt, dass es sich bei den Transpondern/Transceivern der IP-Router oder Switches stets um optische Transponder/Transceiver und zum anderen um Transponder/Transceiver der Line-Ports der IP-Router oder Switches handelt. Zur Unterscheidung der Ports der IP-Router/Switches (synonym auch Switches/IP-Router) der Netzwercknoten von den Ports eines jeweiligen MUX/DEMUX werden erstere als Line-Ports bezeichnet.

Ob ein jeweiliger Netzwerkknoten des OTN entweder einen IP-Router oder einen Switch mit einer Mehrzahl von Ports (Line-Ports) aufweist und, ob diese Line-Ports des IP-Routers oder des Switches mit optischen Transpondern oder mit optischen Transceivern ausgestattet sind, hängt dabei davon ab, wie (das heißt insbesondere auch unter Beteiligung welcher Interfaces) und auf welchem Layer die elektrisch-optische Wandlung der von dem Netzwerkknoten an andere Netzwercknoten ausgesendeten Daten sowie die optisch-elektrische Wandlung bei dem betreffenden Netzwerkknoten von anderen Netzwerkknoten eingehenden Daten erfolgen. Dies gilt aber so auch schon für OTN nach dem Stand der Technik, einschließlich von Sternnetzen, bei denen ein AWG im Sternpunkt zum Einsatz gelangt. Daher soll diese Frage, welche zudem nicht Gegenstand der Erfindung ist, nicht vertiefend betrachtet werden. Zudem werden insoweit IP-Router und Switches einerseits sowie Transponder und Transceiver andererseits (letztere jeweils im Zusammenwirken mit geeigneten Interfaces) zwar nicht als synonym, aber als im Wesentlichen funktional gleichwirkend betrachtet und daher, vereinfachend, getrennt durch einen Schrägstrich gewissermaßen als begriffliches Paar genannt, wobei der Querstrich im Grunde gedanklich für ein "Oder" steht, wohingegen die unter Verwendung eines Schrägstrichs zusammengesetzte Form der Begriffe MUX und DEMUX, also MUX/DEMUX, zwei komplementäre Funktionalitäten bezeichnet.

Wesentlich für die Erfindung ist es, dass zwischen den Transpondern/Transceivern der Line-Ports des IP-Routers/Switches eines Netzwerkknotens und den Ports seines, respektive des ihm zugeordneten MUX/DEMUX, je Übertragungsrichtung eine optische, durch die schon erwähnte Software gesteuerte NxN optische Switchmatrix (nicht zu verwechseln mit dem als begriffliches Paar mit dem IP-Router genannten Switch) angeordnet wird. Die Software, welche außerdem die Transponder/Transceiver ansteuert, ermöglicht im Zusammenwirken mit dieser NxN optischen Switchmatrizen, respektive mit diesen aktiv schaltbaren optischen Matrizen, eine automatisierte Optimierung und/oder Rekonfiguration des OTN.

Wie zuvor ausgeführt, vollziehen sich die die eigentliche Optimierung und/oder die Rekonfiguration eines nach dem erfindungsgemäßen Verfahren betriebenen und demgemäß dazu ausgebildeten OTN betreffenden Vorgänge selbst in Form eines automatisierten Prozesses. Dies schließt grundsätzlich die Möglichkeit ein, dass dieser Prozess, also ein jeweiliger Optimierungsvorgang oder ein (Um-)Konfigurationsvorgang, gewissermaßen manuell durch einen Administrator des Netzes angestoßen wird. Vorzugsweise ist aber das Verfahren so gestaltet, dass dieses in Gänze automatisiert abläuft. Dabei wird das OTN mittels der vom Netzwerkmanagement ausgeführten Software, basierend auf einem dafür in den Einheiten des Netzwerkmanagements gehaltenen Regelwerk, rekonfiguriert und/oder optimiert, wobei Letzteres dem Grunde nach ein sich stets wiederholender, respektive ein sich ständig vollziehender Vorgang ist.

Die automatisierte Optimierung des OTN, welche durch die von dem Netzwerkmanagement verarbeitete Software erfolgt, kann unabhängig davon, ob sie durch einen Administrator angestoßen oder vollautomatisiert nach einem Regelwerk erfolgt ("Zero Touch Optimierung" und auch "Zero Touch Rekonfiguration"), nach unterschiedlichen Gesichtspunkten erfolgen. Sie kann hierbei nach einem, mehreren oder allen der folgenden, beispielhaft genannten Gesichtspunkte erfolgen, nämlich:

- entsprechend der für die Datenübertragung zwischen einzelnen Netzwercknoten des OTN jeweils benötigten Übertragungsbandbreite,
- entsprechend der Redundanzanforderungen des Netzbetreibers, wobei das Netzwerk mit einer bestimmten Anzahl zentraler Knoten oder mit Ringstrukturen realisiert wird und somit beliebige disjunkte Pfade erzeugt werden,
- hinsichtlich der für die Datenübertragung zwischen einzelnen Netzwercknoten, also für dedizierte Verbindungen, im OTN bestehenden Anforderungen an die Latency oder für eine minimale Latenz aller Verbindungen im OTN,
- unter Kostengesichtspunkten, das heißt nach minimalen betrieblichen Kosten, wobei sich die Kostenoptimierung auf Gesichtspunkte beziehen kann, wie

  • eine minimierte IP-Nutzung in den (gegebenenfalls dennoch vorhandenen Transit-) Netzwerkknoten mit dadurch unter anderem minimierten Betriebskosten in den IP-Routern/Switches bezüglich Strom, Abwärme, Platz (Footprint),
  • eine minimale Nutzung von IP-Ports und damit von Transpondern/Transceivern,
  • eine optimierte Nutzung von verschiedenartigen Transpondern/Transceivern mit unterschiedlichen Kapazitäten, hier spektrale Effizienz (SE) der Transponder/Transceiver (Bitrate pro Übertragungsbandbreite in Bit/s/Hz), wobei ein Trade-off bezüglich der Übertragungsreichweite und der SE besteht (je länger die Übertragungslänge, desto geringer die SE), mit zum Beispiel SE = 5 Bit/s/Hz wird eine Reichweite von 1.500 km erreicht.

Das erfindungsgemäße Verfahren kann vorteilhaft noch dadurch weitergebildet sein, dass das Netzelement (optische Switchmatrix), welches die Transponder des optischen IP-Routers eines Netzwerkknotens entsprechend der Ansteuerung durch die Software mit einem jeweiligen Port des MUX/DEMUX in der jeweiligen Übertragungsrichtung verbindet, von der Software hinsichtlich der korrekten Ausführung der durch sie vorgegebenen optischen Schaltvorgänge gemonitort wird. Dies dient der Erhöhung der Betriebssicherheit des OTN und der Früherkennung sich möglicherweise vollziehender Fehlentwicklungen.

Ein die Aufgabe lösendes, zur Ausführung des zuvor beschriebenen Verfahrens ausgebildetes Kommunikationsnetz ist als ein optisches Transport-Netzwerk (OTN) mit mehreren Netzwerkknoten und mit einem Netzwerkmanagement ausgebildet. Die Netzwerkknoten dieses OTN weisen jeweils mindestens einen über mehrere Line-Ports verfügenden optischen IP-Router oder Switch auf, dessen Line-Ports mit mehreren, jeweils einen Übertragungskanal für Daten bereitstellenden optischen DWDM-Transpondern oder optischen DWDM-Transceivern ausgestattet sind. Bestandteil des Kommunikationsnetzes (OTN) ist zudem ein NxN Arrayed Waveguide Grating (NxN AWG), mittels welchem Daten zwischen den Netzwerkknoten durch transparentes optisches Routing jeweils Ende-zu-Ende optisch transparent übertragen werden. Jeder Netzwerkknoten des daher auch als TOR-OTN bezeichneten Netzwerks ist mit dem vorgenannten AWG jeweils über einen optischen Multiplexer/Demultiplexer (MUX/DEMUX) verbunden, der mehrere Ports zur Verbindung mit je einem optischen Transponder/Transceiver der Line-Ports des mindestens einen IP-Routers/Switches des jeweiligen Netzwerkknotens ausgestattet ist.

Erfindungsgemäß ist zwischen den Transpondern/Transceivern der Line-Ports des mindestens einen IP-Routers/Switches eines jeden der Netzwerkknoten und dem MUX/DEMUX, über welchen Daten zwischen dem AWG und dem jeweiligen Netzwerkknoten übertragen werden, je Übertragungsrichtung ein zusätzliches Netzelement (also ein entsprechendes Netzelement in der Upstream-Richtung und ein entsprechendes Netzelement in der Downstream-Richtung) angeordnet. Bei diesem handelt es sich um eine (gegebenenfalls auch in einer Komponente zusammengefasste) NxN optische Switchmatrix je Übertragungsrichtung. Darüber hinaus ist das Netzwerkmanagement mit einer die Ausführung des erfindungsgemäßen Verfahrens bewerkstelligenden Software ausgestattet. Diese Software ist dazu eingerichtet, bei ihrer durch das Netzwerkmanagement erfolgenden Ausführung

a) für jeden Netzwerkknoten jeweils die in der Upstream-Richtung zur Aussendung von Daten an andere Netzwerkknoten sowie in der Downstream-Richtung zum Empfang von Daten anderer Netzwerkknoten zu verwendenden Transponder/Transceiver der Line-Ports des mindestens einen optischen IP-Routers/Switches auszuwählen,

b) für jeden Netzwerkknoten die je Übertragungsrichtung zwischen dem mindestens einen IP-Router/Switch und dem MUX/DEMUX angeordnete NxN optische Switchmatrix dazu anzusteuern, die Transponder/Transceiver der Line-Ports des mindestens einen IP-Routers/Switches sowohl in der Upstream-Richtung als auch in der Downstream-Richtung jeweils mit dem, in Bezug auf das von ihm unterstützte Frequenzband, richtigen Port des MUX/DEMUX zu verbinden.

Grundsätzlich sind für das erfindungsgemäße Kommunikationsnetz (OTN) unterschiedliche physische Topologien denkbar. Vorzugsweise ist dieses jedoch als ein Sternnetz ausgebildet, bei welchem das AWG im Sternpunkt des OTN angeordnet ist. Hierbei kann der Sternpunkt mit dem AWG als eigenständiges Netzelement innerhalb des Netzwerks ausgebildet sein. Er kann aber auch in einem der Netzwerkknoten des OTN angeordnet sein. Auch hinsichtlich der konkreten Ausbildung und Anordnung des bereits mehrfach angesprochenen MUX/DEMUX sowie der erfindungsgemäß je Übertragungsrichtung als zusätzliches Netzelement vorgesehenen optischen Switchmatrix kommen unterschiedliche Möglichkeiten in Betracht. Hierbei können beide Elemente entweder separat zwischen einem Netzwerkknoten und dem AWG im Sternpunkt eines Sternnetzes angeordnet oder als integraler Bestandteile eines Netzwerkknotens ausgebildet sein. Allerdings ist selbstverständlich im Falle einer Integration des MUX/DEMUX in einem jeweiligen Netzwerkknoten auch die dessen Ports mit den Transpondern/Transceivern der Line-Ports des mindestens einen IP-Routers/Switches des Netzwerkknotens verbindende, je Übertragungsrichtung ein Mal vorgesehene NxN optische Switchmatrix als integraler Bestandteil des Netzwerkknotens ausgebildet. Ungeachtet dessen wird aber die NxN optische Switchmatrix, respektive werden die beiden (eine je Übertragungsrichtung) NxN optischen Switchmatrizen bei einer praxisgerechten Umsetzung des vorgeschlagenen Konzepts regelmäßig ohnehin innerhalb des Netzwerkknotens angeordnet sein.

Für die Erfindung und TOR-OTN (optische Netzwerke mit transparentem optischen Routing), auf welche die Erfindung im Hinblick auf deren spezielle Eigenschaften ausgelegt ist, lassen sich die nachfolgend zusammengefassten Vorteile benennen.

TOR-OTN-Kernnetze haben, bis auf optische Verstärker, einen rein passiven Aufbau. Dadurch sind sie kostengünstig zu betreiben und zu warten. Physikalisch folgen TOR Netze vorzugsweise einer sternförmigen Architektur, das heißt alle Verbindungen laufen über einen, zwei oder mehrere zentrale Sternpunkte (entsprechend den betreiberseitigen Anforderungen an die Redundanz der Netzverbindungen). In dem oder den zentralen Sternpunkten befindet sich jeweils ein passives optisches NxN AWG (Arrayed Wave Grating), welches jeweils eine direkte Verbindung zu allen (anderen) Netzwerkknoten aufweist und welches somit eine direkte optische Verbindung aller Netzwerkknoten zu allen anderen Netzwerkknoten zulässt. Jeder Netzwerkknoten ist somit in der Lage, jeden anderen Netzwerkknoten auf einer Lichtwellenlänge anzusprechen. Die Verbindung der optischen und der IP-Netzwerkebene erfolgt beispielsweise über DWDM Transponder (optische Transponder für Dense Wavelength Division Multiplexing), die sich über eine konfigurierbare, pro jeweiliger Übertragungsrichtung vorgesehene NxN optische Switchmatrix dynamisch an die Verkehrs- bzw. Lastanforderungen anpassen können. So kann ein beliebiger Port des IP-Routers/Switches eines Netzwerkknoten auf eine beliebige Lichtwellenlänge konfiguriert werden. Somit kann jeder IP-Router/Switch in einem Netzwerkknoten eine direkte optische Verbindung zu jedem anderen IP-Router/Switch im Netzwerk erhalten. Dadurch ist eine Vollvermaschung des optischen Transport-Netzwerkes möglich, wobei zudem auch mehrfache Vollvermaschungen möglich sind.

Den zuvor erläuterten Eigenschaften von TOR-OTN Rechnung tragend werden durch die Erfindung "Zero Touch" (das heißt ohne händisches Eingreifen vor Ort oder an anderer Stelle im Netzwerk) automatisierte und ganzheitliche und kurzfristige Optimierungen und Konfigurierungen von optischen Paket Transport Netzwerken, die entsprechend dieser TOR-OTN-Architektur aufgebaut sind, ermöglicht. Die Elemente der Netzwerkarchitektur sind, bis auf wenige Ausnahmen, rein passiv und modular. Durch die Einfachheit der Architektur lassen sich mit geringem Aufwand komplexe nationale und internationale Netze aufbauen und betreiben. Insbesondere werden komplexe aktive Komponenten, zum Beispiel ROADMs oder optische Crossconnects, im optischen Transport-Netzwerk vermieden und passive Komponenten eingesetzt, wodurch der Ausfall von Komponenten und des Netzwerkes sowie der Energiebedarf verringert werden können.

Mittels der Erfindung lassen sich TOR Netze (TOR-OTN) für beliebige Service- oder Kundenanforderungen konfigurieren. TOR-Netzwerk-Optimierungen können zeitlich geplant und kurzfristig durchgeführt werden. So können tagsüber Kundenverkehre transportiert werden, wohingegen nachts erhöhte Bandbreiten zur Spiegelung/Backup von Cloud Operations Center zur Verfügung gestellt werden können. Anders als bei derzeit existierenden OTN ist es dabei möglich, dafür erforderliche Veränderungen gesteuert durch die Software sehr schnell und insbesondere auch "Zero Touch", das heißt ohne Eingriffe in die physische Topologie und somit ohne Arbeiten vor Ort an den Netzwerkknoten vorzunehmen.

TOR-Netzwerk-Optimierungen werden über Simulated und/oder Quantum Annealing Verfahren durchgeführt, um Multi-Hop bis hin zu Single-Hop Verbindungen in mehrfach vollvermaschte voneinander unabhängigen Netzebenen mit optisch transparenten Ende-zu-Ende Verbindungen zu ermöglichen. Dadurch wird durch die TOR-OTN Architektur praktisch eine virtuelle Faser Topologie bereitgestellt, die durch SDN (Software Defined Network) Funktionalitäten gesteuert werden kann, so dass beliebige Ende-zu Ende Verbindungen zwischen den TOR-OTN-Knoten praktisch als virtuelle Ende-zu-Ende Verbindungen per "Zero Touch" SDN mäßig konfiguriert werden können.

Ferner können neue Wellenlängen Services eingeführt werden, die zeitlich minutengenau geplant und per "Zero Touch" kurzfristig konfiguriert werden können. Die Automatisierung und "Zero Touch" Konfiguration des TOR-OTN Netzwerkes wird durch Disaggregation, eine Modularisierung und Entkopplung von Abhängigkeiten im TOR-OTN entsprechend der TOR-OTN Architektur, zusammen mit dem zusätzlichen Einsatz von NxN optischen Switchmatrizen und DWDM Multiplexer/Demultiplexer in den TOR-OTN-Knoten, erreicht. Dadurch wird ein wahlfreier Wellenlängenzugriff der DWDM Switch/Router Ports auf die Link-Fasern zwischen den Knoten ermöglicht, der bisher in den OTN Knoten nur aufwendig über ROADMs (Reconfigurable Optical Add / Drop Multiplexer möglich war. Es wird eine Möglichkeit geschaffen, Netzkapazitäten, entsprechend der Verkehrslastannahmen und/oder Messungen, respektive der Lastanforderung der Wellenlängendienste, bis hinunter auf die OSI Ebene 1, frei mit einem SDN-Ansatz zu konfigurieren, zu managen und zu betreiben. Darüber hinaus wird die Abrechnung der Verkehrslast einzelner Wellenlängendienste, analog einer Nutzungsbepreisung bekannter Cloud Dienste, möglich.

In den Links zwischen den Netzwerkknoten des TOR-OTN und dem AWG im Sternpunkt werden nur noch OLAs (Optische Line Amplifier) benötigt, die die auftretenden optischen Verluste ausgleichen. Somit enthält das Kern TOR-OTN nur folgende Komponenten:

- die aktiven OLAs (optische Line Amplifier)
- die optischen Standard Single Mode Fasern (SSMF)
- ein passives NxN AWG.

Das Netzwerk enthält, abgesehen von Komponenten in den Netzwerkknoten selbst, keine sonstigen aktiven Elemente und es werden auch keine ROADMs oder OXCs benötigt. Dadurch ist der Auf- und Ausbau des Kern-TOR-OTN modular und sehr einfach, wodurch sich auch eine verringerte Ausfallwahrscheinlichkeit der TOR-OTN-Komponenten gegenüber den komplexeren OTN-Netzwerken mit geringeren zeitlich wiederkehrenden Wartungskosten (Opex) ergibt.

Die Kern-Komponenten des TOR-OTN sind auch von dessen Rand-Komponenten derart modular entkoppelt, dass für den weiteren Ausbau des TOR-OTN aufgrund von Verkehrszunahmen nur die entsprechenden Knoten-Komponenten, das heißt DWDM-Transceiver (optische Transceiver) für die Switch/Line-Ports in den Endknoten TOR-OTN ausgebaut, respektive nachgerüstet werden müssen.

Ist die Link Kapazität zwischen zwei Endknoten erschöpft, dann muss ein weiteres TOR-OTN aufgebaut werden. Die notwendigen Komponenten in den Netzwerkknoten des TOR-OTN umfassen nur folgende Komponenten pro Netzwercknoten:

- die Line-Cards für die Switch/Router mit den entsprechenden DWDM-Transceivern (Tx/Rx).
- ein NxN optisch transparente Switchmatrix (optische blockierungsfreie Matrix mit n Eingängen und n Ausgängen, die die Transponder/Transceiver [Tx/Rx] mit den DWDM Multiplexern/Demultiplexern verbinden) je Übertragungsrichtung. Die Anzahl n der Ein- und Ausgänge entspricht dabei maximal der Anzahl der Netzwerk-Wellenlängen K und ist abhängig von der gewählten Kanalbandbreite.
  Die Anzahl n der Ein- und Ausgänge kann kleiner als die Anzahl der Netzwerkwellenlängen sein, wenn zum Beispiel direkte Verbindungen von Transpondern/Transceivern der Line-Ports zu entsprechenden Ports des MUX/DEMUX geführt werden, die zum Beispiel eine Grund-Vollvermaschung des OTN-Kernnetzes bereitstellen und damit bereits fest geschaltete Verbindungen bereitstellen, die nicht mehr variabel anzusteuern wären.
- einen bidirektionalen passiven DWDM-Multiplexer/Demultiplexer. Die Anzahl n der Ein- bzw. Ausgänge entspricht auch hier der Anzahl der Netzwerk-Wellenlängen und ist abhängig von der gewählten Kanalbandbreite. Line-seitig liegt nur ein bidirektionaler Port für die Verbindung zur Übertragungsstrecke zum Sternpunkt vor.
- einen Line-seitigen bidirektionalen OLA (Optical Line Amplifier) mit Prebeziehungsweise Booster-Amplifiers in der Downstream-Richtung bzw. in der Upstream-Richtung.

Durch die einfache und überschaubare TOR-OTN-Architektur mit der geringen Anzahl aktiver und passiver Elemente wird auch die Steuerung des TOR-OTN stark vereinfacht und eine Automatisierung sowie eine "Zero Touch" Konfiguration des TOR-OTN Netzwerkes erst ermöglicht.

Aus Sicherheits- und Redundanz-Gründen sollten mindestens zwei TOR-OTN Netzwerke parallel aufgebaut werden, damit im Fehlerfall auf ein paralleles TOR-OTN umgeschaltet werden kann. Dabei kann der Sternpunkt beliebig gewählt werden, zum Beispiel auch durch die optimale Wahl unter Berücksichtigung der Laufzeiten (Latenz/Latency) zwischen den verschiedenen Netzwerkknoten des TOR-OTN. Bei weiter steigenden Verkehrsaufkommen könnte der Aufbau weiterer paralleler TOR-OTN notwendig werden, wobei auch dann weitere Standorte oder Netzwerkknoten des TOR-OTN für die Sternpunkte genutzt werden können, deren Standorte sich durch minimale Latenzen berechnen und optimieren lassen.

Durch die vorgestellte TOR-OTN Architektur können auch bestehende OTN nahtlos durch TOR-OTN Netzwerke erweitert werden. Auch können mittels der Erfindung TOR-OTN mit der beschriebenen TOR-OTN Architektur nahtlos und In-Service erweitert oder verändert werden, so dass TOR-OTN Optimierungen zeitnah und kurzfristig auch in TOR-OTN Netzwerken umgesetzt werden können.

Nachfolgend sollen ein Ausführungsbeispiel, Grundzüge sowie weitere Aspekte der Erfindung anhand von Zeichnungen erläutert werden. Die zugehörigen Zeichnungen zeigen im Einzelnen:

Fig. 1: ein Blockschaltbild einer möglichen Ausbildungsform eines Netzwercknotens eines erfindungsgemäß ausgebildeten OTN,

Fig. 2: eine schematische Darstellung des Teils eines TOR-OTN mit einem Netzwerkknoten gemäß Fig. 1,

Fig. 3: eine beispielhafte grundsätzliche physische Topologie eines erfindungsgemäß ausgebildeten TOR-OTN,

Fig. 4: ein Schema zur Ausprägung und Arbeitsweise des Arrayed Waveguide Grating (AWG) gemäß den Figuren 2 und 3,

Fig. 5: eine beispielhafte Kostenfunktion für das Annealing eines erfindungsgemäßen OTN im Wege einer fortwährend erfolgenden Optimierung.

Den detaillierten Ausführungen zu den Figuren soll an dieser Stelle eine Übersicht zu den dabei und teilweise auch schon zuvor in der Beschreibung verwendeten Abkürzungen vorangestellt werden.

| | |
|---|---|
| Add/Drop | Add/Drop Multiplexer |
| AWG | Arrayed Waveguide Grating |
| B | Bandbreite der optischen Bänder |
| Capex | Capital Expenditure |
| C-Band | optisches Center Band |
| Ch | Channel-Bandbreite der einzelnen optischen Kanäle |
| DWDM | Dense Wavelength Division Multiplexing |
| IF | Interface |
| IP/MPLS | Internet Protocol / Multi Protocol Label Switching |
| ITU-T | International Telecommunications Union - Telecommunication Standardization Sector |
| K | Anzahl K der optischen Wellenlängenkanäle (Ch) |
| kWh | kilo Watt Stunden |
| L2 | Layer 2, Link Layer |
| L3 | Layer 3, Network Layer |
| M | Anzahl M der Kanäle pro Band zwischen den einzelnen Netzwerkknoten |
| N | Anzahl der Netzwerk Knoten |
| NISQ | Noisy Intermediate State Quantum |
| NxN AWG | NxN Port Arrayed Waveguide Grating |
| OD | Origin - Destination Matrix |
| Oeo | Optic-Electric-Optic Conversion |
| OLA | Optical Line Amplifier |
| Opex | Operational Expenditure |
| OSI | Open Systems Interconnection Mode |
| OTN | Optical Transport Network |
| OXC | Optical Cross Connect |
| QAOA | Quantum Approximate Optimization Algorithm |
| QUBO | Quadratic Unconstrained Binary Optimization |
| ROADM | Reconfigurable Optical Add Drop Multiplexer |
| Rx | Receiver |

| S | Sternpunkt |
|---|---|
| SDN | Software Defined Network |
| SE | Spektrale Effizienz in Bit/s/Hz (Bitrate pro Übertragungsbandbreite) |
| SSMF | Standard Single Mode Fiber |
| Tx | Transmitter |
| EUR | Euro |
| SDN | Software Defined Network |
| TOR | Transparent Optical Routed |
| TOR-OTN | Transparent Optical Routed - Optical Transport Network die dieser Erfindung zugrunde liegende Architektur |
| V | Anzahl der bidirektionalen Verbindungen V zwischen den einzelnen Knoten |
| VOA | Variable Optical Attenuator (variabler optischer Dämpfer) |

Ergänzend sei noch vorsorglich darauf hingewiesen, dass im gesamten Kontext dieser Beschreibung sowohl die Begriffe "Netzwerkknoten" und "Knoten" als auch die Begriffe "Netzwerk" und "Netz" jeweils synonym gebraucht werden.

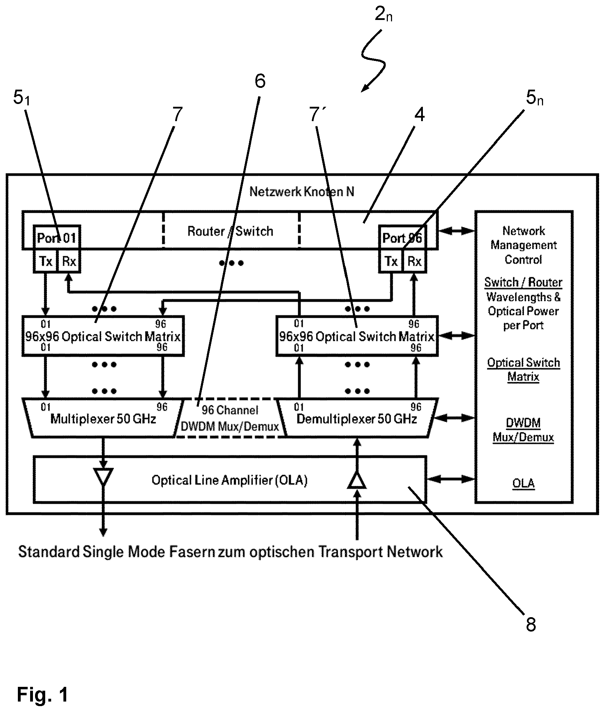

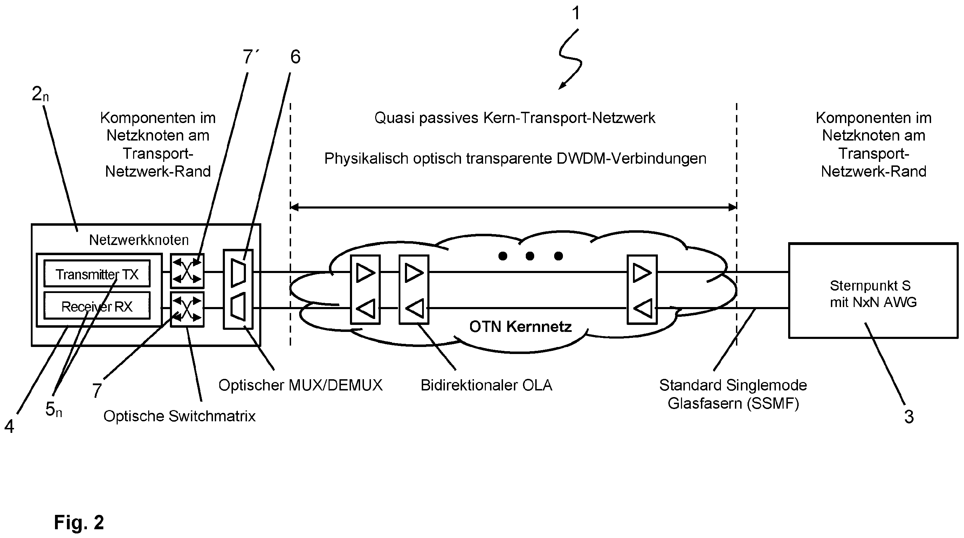

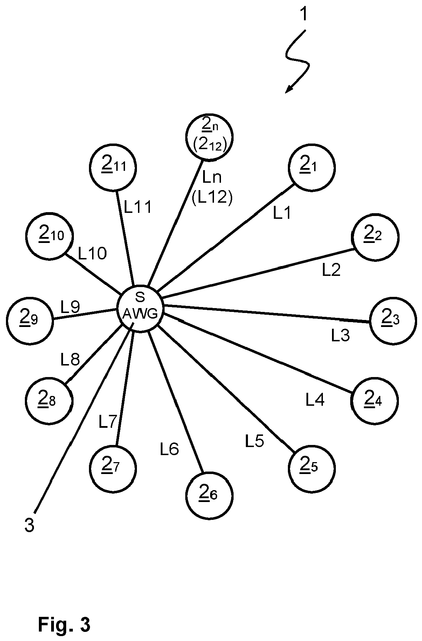

Die Fig. 1 zeigt ein Blockschaltbild einer beispielhaften, die Erfindung nicht beschränkenden Ausbildungsform eines Netzwerkknotens in einem erfindungsgemäßen TOR-OTN 1, das heißt in einem optischen Transportnetzwerk OTN 1 mit transparentem optischen Routing TOR. In dem Netzwerkknoten $2_n$, der beispielsweise Bestandteil eines TOR-OTN 1 gemäß der Fig. 2, respektive der Fig. 3 ist, ist der optische Multiplexer/Demultiplexer MUX/DEMUX 6 integriert, über welchen der IP-Router 4 des Netzwerkknotens $2_n$, das heißt die optische Transponder seiner Line-Ports $5_1$, $5_2$, ..., $5_n$, mit dem das transparente Routing bewerkstelligenden AWG 3 verbunden ist/sind. Erfindungsgemäß ist zwischen dem MUX/DEMUX 6 und den optischen Transpondern des IP-Routers 4 und damit ebenfalls innerhalb des Netzwerkknotens $2_n$ eine NxN optische Switchmatrix (Optical Switchmatrix) 7, 7' je Übertragungsrichtung angeordnet.

Durch die im Netzwerkmanagement des erfindungsgemäßen TOR-OTN 1 implementierte Software wird festgelegt, welcher optische Übertragungskanal jeweils für die Übertragung von Daten des dargestellten Netzwerkknotens an einen anderen Netzwerkknoten $2_1$, $2_2$, ..., 2n des TOR-OTN 1 verwendet wird. Dies geschieht, indem die Software den optischen Transponder des IP-Routers 4 des Netzwerkknotens 2n, welcher den durch das Frequenzband des Trägersignals definierten Übertragungskanal mit der gewünschten Übertragungsbandbreite bereitstellt, ansteuert und gleichzeitig die ebenfalls innerhalb des Netzwerkknotens $2_n$ angeordneten optischen Switchmatrizen 7, 7' dazu ansteuert, diesen Transponder mit dem richtigen, das heißt das entsprechende Frequenzband unterstützenden Port des MUX/DEMUX im Wege eines optischen Schaltvorgangs zu verbinden.

In dem Netzwerkknoten $2_n$ werden die Ende-zu-Ende Verkehre an den Line-Ports $5_1$, $5_2$, ..., $5_n$ der IP-Router/Switch 4 bereitgestellt (im Beispiel ein IP-Router). Dazu werden "hot pluggable" DWDM fähige Transceiver-Module genutzt, die die DWDM-Übertragungssignale auf abstimmbaren optischen Frequenzen bereitstellen können, beispielsweise im 50 GHz Grid entsprechend der ITU-T Recommendation G.694.1. Danach können beispielsweise im C-Band 96 Kanäle mit einer optischen Bandbreite von je 50 GHz im DWDM Frequency Grid bereitgestellt werden (siehe Tabelle 1 am Ende der Beschreibung).

Bisher konnten zwar die Switch/Router-Ports (Line-Ports) in ihrer Frequenz abgestimmt werden, aber die Fasern mussten entsprechend der optischen Frequenzen mit den entsprechenden Ports eines DWDM-Multiplexers auf der Sendeseite TX bzw. eines DWDM Demultiplexers auf der Empfangsseite Rx manuell und händisch starr verbunden werden, wodurch eine wahlfreie Port Aufschaltung mit beliebiger Wellenlängen und damit auch eine Automatisierung nicht möglich war.

Gemäß der Erfindung wird eine je Übertragungsrichtung in jedem Netzwerkknoten $2_1$, $2_2$, ..., $2_n$ zusätzlich vorhandene NxN optische Switchmatrix 7, 7'dazu genutzt, sowohl sende- als auch empfangsseitig einen wahlfreien optischen Frequenz-Zugriff von beliebigen Switch/Router Ports (Line-Ports $5_1$, $5_2$, ..., $5_n$), auf alle Line-seitigen optischen Wellenlängenkanäle der an und abgehenden Fasern zu ermöglichen.

Dazu werden gemäß den Fig. 1 und 2 zwei 96 x 96 optische Switchmatrizen beispielhaft genutzt, welche die Tx/Rx Ports mit den DWDM-Multiplexer/Demultiplexer (MUX/DEMUX) verbinden, die ihrerseits mit den Line-seitigen OLA, respektive Standard Single Mode Fasern (SSMF) verbunden sind. Anstelle von zwei 96 x 96 Port-Switchmatrizen kann z.B. auch eine 192 x 192 Port-Switchmatrix eingesetzt werden.

Werden für ein vollvermaschtes Netz zum Beispiel N Wellenlängen starr zwischen den Transpondern und dem MUX/DEMUX 6 für eine Grundversorgung an Übertragungskapazitäten bereitgestellt, dann verringert sich die Anzahl der Ports der je Übertragungsrichtung vorgesehenen NxN optischen Switchmatrix 7, 7' entsprechend, beispielsweise auf eine 84 x 84 Port-Switchmatrix (12 Netzwerkknoten, 96 x 50 GHz Kanäle, 12 Wellenlängen werden für ein vollvermaschtes Netzwerk benötigt, das heißt es bleiben 96 - 12 = 84 zu verschaltende 50 GHz Kanäle pro Netzwerkknoten für den wahlfreien Zugriff auf die verbleibenden DWDM-Kanäle.

Mittels der Erfindung ist somit - wie bereits ausgeführt - eine "Zero Touch" Automatisierung des Netzwerks und der Netzwerkknoten $2_1$, $2_2$, ..., $2_n$ des TOR-OTN 1 möglich. Dabei steuert die durch das Netzwerkmanagement verarbeitete Software die IP-Router/Switches 4 bezüglich der Datenverkehre, der optischen Wellenlängen, der Power der DWDM-Transponder/Transceiver (Tx und Rx) in den Line-Ports $5_1$, $5_2$, ..., $5_n$, als auch die NxN optische Switchmatrix 7, 7'. Sie erfasst und speichert außerdem die Daten in Logfiles zur weiteren Verwendung, Auswertung und Optimierung.

Für die optische Switchmatrix 7, 7' kann dabei jeder Pfad separat in der Leistung erfasst, als auch dämpfungsmäßig, entsprechend einer VOA (Variable Optical Attenuator) Funktionalität eingestellt werden.

Der DWDM-Multiplexer/Demultiplexer (MUX/DEMUX 6) ist ein passives optisches Netzelement, wobei in der Regel nur die optische Leistung pro Wellenlängenkanal erfasst und ausgelesen werden kann.

Zudem sind durch den Einsatz kohärenter Transponder für die Transmitter Tx und Receiver Rx keine Linkkompensationen für Chromatische Dispersion, Mean Group Delay, Polarisationsmodendispersion, oder sonstiges Link-Dispersionsmanagement notwendig und auch nicht vorgesehen.

Der in der Fig. 1 gezeigte Netzwerkknoten $2_n$ ist beispielsweise Bestandteil eines erfindungsgemäß ausgebildeten TOR-OTN 1, von welchem in der Fig. 2 ein Ausschnitt in einer schematischen Darstellung gezeigt ist. Die Fig. 2 zeigt den im Randbereich eines ein Kernnetz für ein Kommunikationsnetz ausbildenden TOR-OTN 1 angeordneten Netzwerkknoten $2_n$ und den als Sternpunkt S angeordneten AWG 3, welches mit dem erfindungsgemäß ausgebildeten Netzwerkknoten $2_n$ verbunden ist. Bei der betreffenden Verbindung handelt es sich um eine bidirektionale Verbindung, also um eine Verbindung, über welche einerseits mittels des AWG 3 von dem Netzwerkknoten (Netzwerkknoten gemäß Fig. 1) Daten an andere Netzwerkknoten $2_1$, $2_2$, ... ausgesendet und andererseits durch den gezeigten Netzwerkknoten 2n als Zielknoten Daten von anderen (hier nicht gezeigten) Netzwerkknoten des TOR-OTN empfangen werden.

Die Fig. 3 zeigt beispielhaft und ebenfalls in schematisierter Darstellung die physische Topologie eines OTN 1, nämlich eines TOR-OTN, von welchem in der Fig. 2 ein Ausschnitt etwas detaillierter dargestellt und in der Fig. 1 einer seiner Netzwerkknoten $2_n$ gezeigt sind. Es handelt sich hierbei, wie ersichtlich, um ein Sternnetz, bei welchem der Sternpunkt S mit dem AWG 3 separat, also nicht als Bestandteil einer der (im gezeigten Beispiel 12) Netzwerkknoten $2_1$, $2_2$, ..., $2_n$ angeordnet ist. Obwohl das Netzwerk, also das OTN 1, hinsichtlich seiner physischen Topologie, wie in der Figur ebenfalls gut zu erkennen ist, insoweit nicht als vollvermaschtes Netz ausgebildet ist, als dessen einzelne Netzwerkknoten $2_1$, $2_2$, ..., $2_n$ untereinander nicht direkt verbunden sind, wird mittels des AWG 3 ein logisch vollvermaschtes Netz, also gewissermaßen ein virtuelles vollvermaschtes Netz realisiert, das gemäß der Erfindung insbesondere mittels der in Fig. 3 nicht gezeigten NxN optischen Switchmatrizen 7, 7' (siehe dazu Fig. 2) softwaremäßig gesteuert werden kann. Somit ist ein wesentlicher Aspekt der Erfindung die Realisierung einer software-definierten Netzwerktopologie (Software Defined Network Topologie).

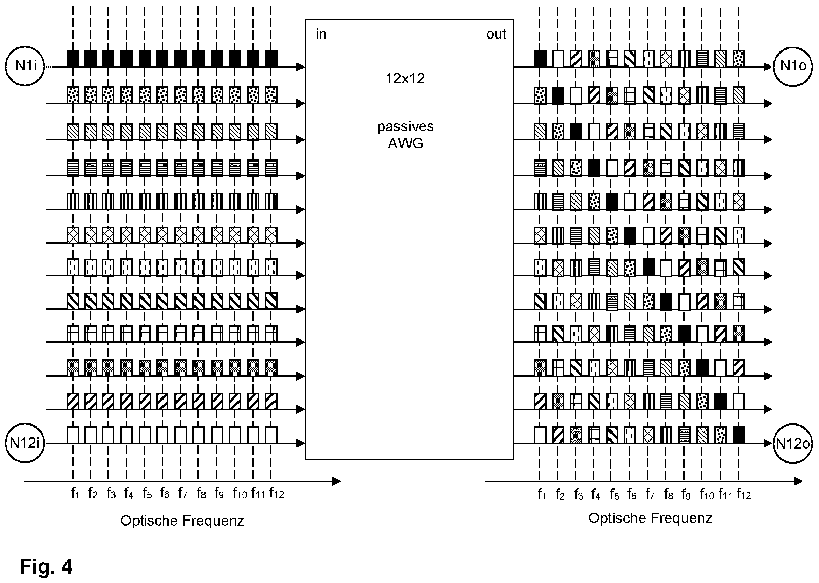

Mit Hilfe des rein passiven AWG 3 werden dabei von jedem der Netzwerkknoten $2_1$, $2_2$, ..., $2_n$ Daten an jeden anderen beliebigen Netzwerkknoten $2_1$, $2_2$, ..., $2_n$ des OTN 1 durch transparentes optisches Routing TOR (das heißt insbesondere ohne zwischengeschaltete optisch-elektrisch-optische Wandlung) direkt optisch Ende-zu-Ende übertragen. Ermöglicht wird dies durch die spezielle Funktionsweise des AWG 3, welche in der Fig. 4 schematisch veranschaulicht ist. Durch das AWG 3 wird demnach, bezogen auf die jeweilige Übertragungsrichtung, ausgangsseitig ein vollständig permutiertes optisches Frequenz-Shuffle aller an den Eingängen des AWG 3 ankommenden Frequenzbänder (Übertragungskanäle) bereitgestellt. Somit ist jeder Netzwerkknoten $2_1$, $2_2$, ..., $2_n$ des OTN 1 über das AWG 3 unter Nutzung eines bestimmten Übertragungskanals (eines bestimmten Frequenzbandes des Trägersignals) verbunden.

Jede der die n Netzwerkknoten $2_1$, $2_2$, ..., $2_n$ (im Beispiel 12 Netzwerkknoten) in der Fig. 3 mit dem AWG 3 verbindendenden Linien $L_1$, $L_2$, ...., $L_n$ symbolisiert dabei eine bidirektionale Verbindung, welche einerseits in der Upload-Richtung (aus Sicht der Netzwerkknoten $2_1$, $2_2$, ..., $2_n$, also von diesen weg in Richtung des AWG 3) sowie andererseits in der Download-Richtung (vom AWG 3 zu den Netzwerkknoten $2_1$, $2_2$, ..., $2_n$ hin) jeweils mittels einer Standard Singlemode Glasfaser realisiert ist.

Die einzelnen optischen Frequenzbänder der Bandbreite B werden rein passiv durch das NxN AWG 3 geleitet. Für ein TOR-OTN mit 12 Netzwerkknoten und mit einem 12-Port_AWG 3 sowie einer Bandbreite von 4.800 GHz im optischen C-Band, welches durch optische Erbium Faserverstärker verstärkt werden kann, ergibt sich eine Bandbreite von 400 GHz pro optischem AWG-Frequenzband. Pro AWG-Frequenzband können somit beispielsweise bis zu 8 optische 50 GHz Kanäle passiv durchgeleitet werden. Dabei bestimmt die optische Wellenlänge auf der Eingangsfaser, das heißt am jeweiligen Eingangs-Port des NxN AWG, auf welchem Ausgangs-Port, das heißt auf welche Ausgangsfaser, die optischen Signale transparent und rein passiv durch das AWG geleitet werden. Für N = 12 ergibt sich z.B. eine Verbindungsbandbreite von 400 GHz (oder auch von 8 x 50 GHz Wellenlängenkanälen) für jedes einzelne AWG-Band.

Durch das NxN AWG können alle bidirektionalen virtuellen Wellenlängen-Verbindungen, wie in einem physisch vollvermaschten Netzwerk, zwischen allen Netzwerkknoten des TOR-OTN als Single Hop-Verbindungen bereitgestellt werden. Demnach handelt es sich bei dem in der Fig. 3 gezeigten TOR-OTN physisch um ein teilvermaschtes Netzwerk (Topologie), welches aber ein vollvermaschtes virtuelles Netzwerk darstellt und daher gleich einem physisch vollvermaschten Netz genutzt werden kann.

Dabei können aber im praktischen Einsatz dieses Netzwerks, aufgrund einer ganzheitlichen Optimierung, verschiedene Verbindungen - gegebenenfalls auch nur temporär - nicht genutzt werden, so dass dann eine teilvermaschte optimale Netzwerkstruktur bereitgestellt wird. Das heißt es liegt eine virtuelle Topologie für die Verbindungen zwischen den Netzwerkknoten vor, die nach Bedarf Software mäßig definiert und eingestellt werden kann, also eine virtuelle Software Defined Network (SDN) Topologie, die entsprechend den jeweiligen Anforderung als teilvermaschte oder virtuell vollvermaschte Struktur genutzt werden kann.

Selbstverständlich können, abweichend von den durch die Fig. 3 und 4 veranschaulichten Verhältnissen auch Netzwerke mit weniger Netzwerkknoten oder, mittels eines eine entsprechende Anzahl von Ports aufweisenden AWG, Netzwerke mit mehr als 12 Netzwerkknoten realisiert werden. Die am Ende dieser Beschreibung angefügte Tabelle 1 (unterteilt in Tabelle 1a und Tabelle 1b) gibt beispielhaft eine Übersicht über mögliche Netzwerkstrukturen und deren Kapazitäten für vollvermaschte Netze, wobei die jeweils angenommene, von dem verwendeten Modulationsverfahren abhängige spektrale Empfindlichkeit angibt, wie viele Bit pro Sekunde und Hertz der Trägerfrequenz in einem Kanal kodiert werden.

Die in der Tabelle 1 für unterschiedliche Konstellationen genannten Werte stehen dabei wie nachfolgend dargestellt untereinander in Beziehung.

Aus der Anzahl N der Netzwerk Netzwerkknoten (Knoten) ergibt sich die Anzahl der bidirektionalen Verbindungen V zwischen den einzelnen Netzwerkknoten des vollvermaschten Netzwerkes zu

$$V = N * (N - 1) / 2.$$

Für das erweiterte optische C-Band mit einer Bandbreite von 4.800 GHz ergibt sich die Bandbreite der optischen Bänder B zu

$$B = 4.800 / N.$$

Die Bandbreite Ch der einzelnen optischen Kanäle ist dabei in der Tabelle entsprechend der ITU-Empfehlung, nämlich gemäß ITU-T Recommendation G.694.1, "Spectral grids for WDM applications: DWDM frequency grid" beispielhaft für die Werte 50 GHz, 75 GHz und 100 GHz angegeben worden. Ausgehend von dieser jeweiligen Kanalbandbreite Ch und von der Bandbreite der Bänder B ergibt sich die Anzahl M der Kanäle pro Band zwischen den einzelnen Knoten zu

$$M = B / Ch.$$

Die Anzahl K der optischen Wellenlängenkanäle (Ch) im Netzwerk ergibt sich aus der Bandbreite des C-Bandes und der Kanalbandbreite Ch zu

$$K = 4.800\ GHz / Ch.$$

Die Spektrale Effizienz (SE) ist, wie bereits ausgeführt, ein Wert des optischen Kanals für die übertragene Kapazität pro optischer Bandbreite und wird im Bereich von 2 Bit/s/Hz bis 12 Bit/s/Hz beispielhaft gewählt.

Die Kapazität pro Kanal ergibt sich dann aus der Kanalbandbreite Ch und der Spektralen Effizienz SE zu

$$Kapazität\ pro\ Kanal = Ch * SE.$$

Die Kapazität pro Verbindung von Netzwerkknoten z Netzwerkknoten ergibt sich aus der Anzahl der Kanäle pro Band M und der Kapazität pro Kanal zu

$$Kapazität\ pro\ Knoten\text{-}zu\text{-}Knoten\text{-}Verbindung = M * Kapazität\ pro\ Kanal$$

Die gesamte theoretische Netzwerkkapazität ergibt sich aus der Anzahl der bidirektionalen Verbindungen V im vollvermaschten Netzwerk und der Kapazität pro Knoten-zu-Knoten-Verbindung zu

$$Gesamte\ Netzwerk\ Kapazität = V * Kapazität\ pro\ Knoten.$$

Somit kann zwischen jedem der beispielsweise 12 Netzwerkknoten und einem anderen dieser Netzwerkknoten eine optische Bandbreite von 400 GHz und damit auch ein vollvermachtes transparentes Netzwerk mit Single-Hop Ende-zu-Ende Verbindungen zwischen allen Netzwerkknoten des TOR-OTN bereitgestellt werden. Bei einer Spektralen Effizienz von z.B. 5 Bit/s/Hz kann damit eine Kapazität von 2 Tbit/s zwischen jeweils zwei Netzwerkknoten im vollvermaschten TOR-OTN mit 12 Netzwerkknoten bereitgestellt werden. Die Übertragungslänge kann dabei bis zu ca. 1.500 km betragen und ist damit beispielsweise ausreichend für ein deutsches nationales Kern TOR-OTN Netzwerk.

Die Erfindung kann zur kurzfristigen Optimierung, Automation und Umkonfiguration von Transport-Netzwerken in den verschiedensten Bereichen, vom Metronetz bis hin zu nationalen und internationalen TOR-OTN, genutzt werden. Voraussetzungen dafür sind der TOR-OTN Aufbau entsprechend des "Transparent Optically Routed Optical Transport Network" TOR-OTN Konzepts sowie die Nutzung der vorgestellten Komponenten:

- Im TOR-OTN Kernnetzbereich

    ◦ Passives optisches NxN AWG
    ◦ OLAs

- Im Randnetzbereich TOR-OTN, nämlich in den dortigen Netzwerkknoten

    ◦ OLA.
    ◦ bidirektionale DWDM Multiplexer/Demultiplexer.
    ◦ NxN optische Switchmatrizen.
    ◦ Switch/Router Line-Cards für DWDM Interfaces für entsprechende Bitraten.
    ◦ Pluggable Tx/Rx DWDM Transceiver/Transponder für entsprechende Bitraten beziehungsweise Spektrale Effizienzen.

Durch die Erfindung sind ganzheitliche, zeitlich planbare, automatisierte und damit auch kurzfristige Optimierungen sowie "Zero Touch" Konfigurationen von TOR-OTN möglich geworden, die virtuelle topologische Strukturen und Verbindungen miteinschließt.

Zusätzlich können auch zeitlich geplante, automatisierte, per "Zero Touch" und damit kurzfristige Ende-zu-Ende Wellenlängen-Services zwischen den Netzwercknoten konfiguriert und bereitgestellt werden. Unter einem Wellenlängen-Service verstehen man beispielsweise die Provisionierung dedizierter Bandbreite im OTN für einen Streaminganbieter, der einen definierten Durchsatz und eine Latenz vertraglich zugewiesen bekommt. Dafür könnte die Anzahl der Knoten und/oder auch die Bandbreite der optischen Kanäle, wie beispielsweise in der ebenfalls am Ende der Beschreibung angefügten Tabelle 2 dargestellt, angepasst werden.

So kann die optische Kanalbandbreite beispielsweise auf 25 GHz oder 12,5 GHz skaliert werden, wodurch die Anzahl der optischen Kanäle entsprechend, nämlich zum Beispiel auf 192 oder 384 Kanäle, steigen würde. Auch für diese Größenordnung gibt es optisch transparente 192 x 192 Port oder auch 384 x 384 Port blockierungsfreie Switchmatrizen, die eine wahlfreie Verschaltung optischer Frequenzen beliebiger Switch/Router Ports auf die entsprechenden Wellenlängenkanäle der an- und abgehenden Verbindungen unterstützen, wobei auch entsprechende 192 x 1 Port oder 384 x 1 Port DWDM-Multiplexer/Demultiplexer bereitgestellt werden müssen.

Für die Dimensionierung des TOR-OTN Kernnetzwerk-Bereiches ist ausschließlich die Anzahl der Netzwerkknoten N zu berücksichtigen, und das entsprechende passive NxN AWG 3 muss im TOR-OTN Sternknoten S bereitgestellt werden.

Die Dimensionierung des Randbereichs des TOR-OTN Netzwerks ist unabhängig von dem TOR-OTN Kernnetzwerk-Bereich und kann sich an den zu nutzenden Services orientieren, zum Beispiel breitbandige TOR-OTN Transport Network Services (entsprechend Tabelle 1) oder schmalbandige Kunden Wellenlängen-Services (entsprechend Tabelle 2).

Beide TOR-OTN Netzwerke können auch parallel und unabhängig voneinander aufgebaut werden und entsprechende Services unterstützen. Insbesondere können parallel aufgebaute TOR-OTN-Netzwerke separat automatisch per "Zero Touch" und zeitlich gesteuert optimiert und automatisch konfiguriert werden. Dabei können entsprechende Services schnell und zeitnah per "Zero Touch" SDN-Funktionalität durch das Management in Service gebracht werden.

Wellenlängen-Services ermöglichen die Erweiterung des "Plattform as a Service" Geschäftsmodelles aus der Cloud in den "Network as a Service"-Bereich. So lassen sich, neben einer dynamischen cloudbasierten Provisionierung der Computer, Netzwerk- und Storage-Ressourcen im Lösungsgeschäft zusätzlich die Konfiguration der optischen Weitverkehrs- und Transportnetzwerke konfigurativ und dynamisch zuteilen, um voll flexible Lösungen von den zentralen Cloudressourcen bis zu den Glasfasernetzanschlüssen beim Kunden zu gestalten. Zudem lassen sich auch Abrechnungsmodelle, die Transportnetzwerkkapazitäten "on demand" abrechnen können, analog den gängigem Abrechnungsmodellen bei Cloud Infrastrukturen, realisieren.

Durch die Erfindung wird praktisch eine virtuelle Topologie ermöglicht, die auf optisch transparenten Wellenlängenverbindungen beruht. Diese virtuelle Netzwerk-Topologie kann durch die Netzwerk Management Software konfiguriert werden, wodurch eine SDN (Software Defined Network) Funktionalität bereitgestellt werden kann, die es erlaubt das TOR-OTN automatisiert zu betreiben, sowie auch zeitlich zu steuern. Dadurch werden zeitlich gesteuerte automatische "Zero Touch" TOR-OTN Optimierungen und Konfigurations-Updates kurzfristig möglich.

Für die TOR-OTN Optimierung kann z.B. auch ein Simulated oder Quantum Annealing Verfahren genutzt werden, das in kurzer Zeit eine ganzheitliche und bestmögliche Optimierung des TOR-OTN liefern kann. Da die Annealing Optimierung an sich nur eine kurze Zeit beansprucht, können weitere Optimierungsläufe bei veränderten TOR-OTN Bedingungen, z.B. aufgrund steigender Verkehrsbedarfe, kurzfristig durchgeführt werden. Dabei können auch die Eingangsparameter automatisch aus den Netzwerk-Elementen ausgelesen werden, um damit dann die ganzheitliche Optimierung und Update-Konfigurationen durchzuführen.

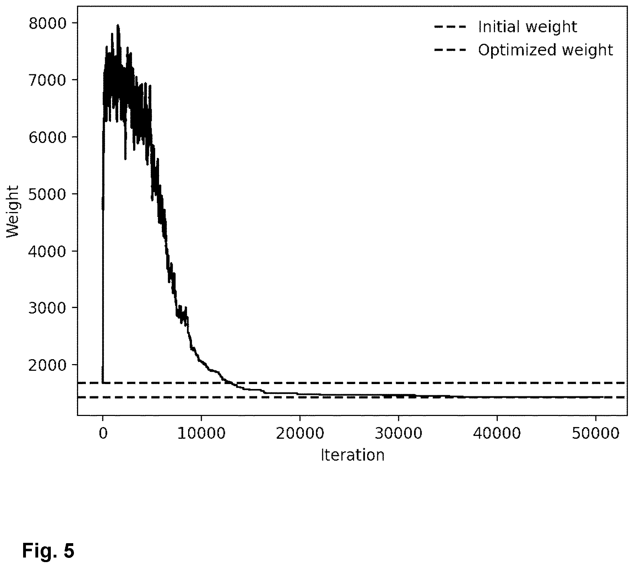

Die Fig. 5 zeigt beispielhaft einen möglichen Verlauf der Kostenfunktion, wie sie sich im Verlaufe des Annealing-Optimierungsprozesses des erfindungsgemäßen Netzwerks einstellt. Die Kosten sind hierbei exemplarisch dargestellt als "Gewicht" ("Weight") als Funktion der Annealing-Schritte. Es wird erkennbar, dass, ausgehend von einer vorhandenen Netzkonfiguration, die Kosten im Verlaufe des Annealing-Prozesses auf einen absoluten optimalen Wert reduziert werden können, wobei insbesondere auch die virtuelle, das heißt softwaredefinierte (software defined) Topologie des TOR-OTN verändert werden kann. Die Umsetzung der optimierten Netzstruktur kann mittels der Erfindung ebenfalls erfolgen, ohne dass es erforderlich wäre, Änderungen an der physischen Topologie des Netzwerks vorzunehmen und dafür Außendienstmitarbeiter vor Ort zu den Netzwerkknoten oder zum AWG zu entsenden (Zero Touch).

In Fig.5 bedeuten die Iteration auf der x-Achse die Anzahl der Optimierungsschritte im Annealing-Prozess und das Weight der y-Achse die betrachteten Kosten des untersuchten Systems mit den entsprechenden Eingangsparametern, hier die Verkehrsmatrizen. Der Annealing-Prozess gemäß der Fig. 5 dauert nur eine kurze Zeit (Minuten). Beispielsweise ausgehend von einem Wert, der durch die bestehende Netz-Topologie gegeben ist (das ist die obere gestrichelte waagrechte Line) bei der der Annealing-Prozess startet, ergibt sich das optimierte Netzwerksystem nach ca. 50.000 Iterationsschritten, repräsentiert durch die untere waagrechte gestrichelte Linie mit den verringerten Kosten (Weight).

Durch die verwendete TOR-OTN-Architektur einschließlich der virtuellen Topologie und wahlfreiem Zugriff der Netzwerkknoten auf beliebige Routerports (Line-Ports des IP-Routers/Switches) mit optischen Transpondern/Transceivern, beliebige Wellenlängen und Zielknoten können Ende-zu-Ende Multi-Hop mit TOR-OTN Transit-Netzwerkknoten bis hin zu Single-Hop Verbindungen ohne TOR-OTN Transit-Netzwerkknoten sowie bis hin zu mehrfach vollvermachte TOR-OTN Strukturen in die Optimierung mit einbezogen werden.

Schließlich können die automatisiert erzeugten Optimierungsergebnisse wiederum automatisiert direkt und zeitnah auf die Umkonfiguration des TOR-OTN angewendet werden.

Die automatisierte Optimierung und Umkonfiguration des TOR-OTN wird insbesondere auch dadurch erleichtert und möglich, dass die Zahl der benötigten Komponenten sehr gering ist und, da wo dies möglich ist, auch passiver Natur sind. Im TOR-OTN Kernbereich gibt es nur die passiven NxN AWG und die aktiven OLA Komponenten. Am Rande des Kernnetzes in den TOR-OTN Knoten gibt es nur die passiven DWDM Multiplexer/Demultiplexer, die aktiven NxN optischen Switchmatrizen, und die DWDM Switch/Router Interface Komponenten. Dadurch ergibt sich eine sehr einfache und überschaubare TOR-OTN-Architektur die in all ihren Funktionalitäten per "Zero Touch" entsprechend den automatisch ermittelten Eingangsgrößen automatisch ganzheitlich und per Zeitplanung optimiert und auch per "Zero Touch" konfiguriert werden kann.

Mit der Erfindung kann, im Gegensatz zu herkömmlichen OTN Optimierungen, eine gesamtheitliche TOR-OTN-Optimierung durchgeführt werden, wobei zum Beispiel auch eine virtuelle Topologie der Verbindungen als Ergebnis abgeleitet werden kann.

Folgende Eingangsgrößen können beispielsweise genutzt werden:

- Ende-zu-Ende Verkehrsmatrix zwischen allen N Netzwerkknoten des TOR-OTN
  o Somit müssen N x (N-1) /2 bidirektionale Verbindungen durch Monitoring ermittelt werden. Bei einem 12 Knoten-Kernnetz sind das 66 bidirektionale Verbindungen.

- Entfernungsmatrix zwischen allen N Netzwerkknoten des TOR-OTN

  ◦ Somit ergeben sich auch N x (N-1) /2 Entfernungen, das heißt, für jede Ende-zu-Ende Verbindung eine zugehörige Entfernung.
  ◦ Aus der Entfernung kann die Verzögerung (Latency) der Signale im TOR-OTN für jede Ende-zu-Ende Verbindung ermittelt werden. Dadurch können die optimalen Knoten als Standorte für die NxN AWG in den Sternpunkten ermittelt werden.
  ◦ Gleichzeitig können bei vorliegenden Sternpunkten die optimalen Verbindungen bzgl. der Latency abgeleitet werden.

- Maximale Entfernung zwischen den OLAs (TOR-OTN Span) im TOR-OTN Kernbereich, zum Beispiel 40 km oder 60 km, zur Bestimmung der Anzahl der OLAs.

- Freie Verbindungskapazität, die angibt, wie viel freie Kapazität eine Verbindung aufweisen muss, bevor die Verbindung ausgebaut werden muss, beispielsweise 40 Gbit/s bei einer 100 Gbit/s Verbindung entsprechend der Spektralen Effizienz SE der genutzten Transponder/Transceiver.

- Freie Netzkapazität, die angibt, wie viel freie Kapazitäten das TOR-OTN aufweisen muss, bevor ausgebaut werden muss, beispielsweise 50 % der Verkehrslast, um weitere Verkehrskapazitäten durch ein zweites paralleles OTN, das aus Redundanzgründen parallel aufgebaut ist, bereitstellen zu können.

- Kosten für die TOR-OTN Kernbereich Komponenten

  ◦ Kosten für NxN AWGs.
  ◦ Kosten für OLAs.
  ◦ Kosten für den Platz- und Strombedarf der OLAs und NxN AWGs (Foot-print).

- Kosten für die TOR-OTN Randbereich-Komponenten in den Knoten (ohne Switch/Router).

  ◦ Kosten für die Switches/IP-Router-Cards die die entsprechenden Interfaces tragen, z.B. für 100 Gbit/s, 200 Gbit/s, 400 Gbit/s, 800 Gbit/s, etc.
  ◦ Kosten für die DWDM pluggable Interfaces für die Bitraten, z.B. für 100 Gbit/s, 200 Gbit/s, 400 Gbit/s, 800 Gbit/s, etc.
  ◦ Kosten für die NxN optischen Switchmatrizen inkl. VOA und Monitoring der optischen Leistungen pro Switch Pfad.
  ◦ Kosten für die passiven DWDM Multiplexer/Demultiplexer.

- Kosten für den Energiebedarf von Switches/IP-Routern pro Kapazitätseinheit, z.B. EUR/kWh.

- Kosten für den Platz- und Strombedarf (Footprint) der Komponenten in den Netzwerkknoten.

Als Ergebnis der Annealing Optimierung ergibt sich ein absolutes Minimum für die Gesamtkosten des OTN, wobei z.B. folgende Ausgangsgrößen abgeleitet werden können:

- Führung aller Ende-zu-Ende Verbindungen durch das OTN:

  ◦ Bereitstellung der virtuellen Netzwerk Verbindungstopologie, beispielsweise durch die Angabe aller Single-Hob bzw. Multi-Hop Verbindungen.
  ◦ Daraus resultiert die teil- bzw. vollvermaschte SDN TOR-OTN virtuelle Topologie der Verbindungen.
  ◦ Daraus resultieren ferner die Kapazitäten für die einzelnen TOR-OTN Links und Verbindungen.
  ◦ Zudem resultieren daraus die Kapazitäten für die Switches/IP-Router in den einzelnen Knoten.
  ◦ Daraus resultiert wiederum der Overload Packet Kapazitäts Faktor, der das Verhältnis der gesamten Packet Kapazitäten in den Knoten für die Switch/Router (zusätzliche Switch/Router Kapazitäten aufgrund der Multi-Hop Verbindungen) zur notwendigen Packet Kapazität in den Knoten für die Switch/Router bei Vollvermaschung sowohl in bestehenden OTN als auch im TOR-OTN Netzwerk angibt.
  ◦ Daraus resultiert die Anzahl der benötigten Interfaces und Packet Line Cards für die Switches/IP-Router in den einzelnen TOR-OTN-Knoten, und auch die Bitraten für die einzelnen optischen Transceiver/Transponder.
  ◦ Daraus resultieren die Signal Verzögerungen (Latency) für alle Ende-zu-Ende Verbindungen im TOR-OTN.
  ◦ Daraus resultieren die beste, zweitbeste, etc. Positionierung für die Sternpunkte im TOR-OTN Netzwerk, zum Beispiel aufgrund der Latency für die Ende-zu-Ende-Verbindungen im TOR-OTN.
  ◦ Daraus resultiert die Realisierung mindestens eines weiteren redundanten TOR-OTN Netzwerkes zur Sicherstellung der Ausfallsicherheit.

- Die Anzahl der notwendigen optischen DWDM Systeme im TOR-OTN Kernbereich:

  ◦ Daraus resultiert die Anzahl der Sternpunkte.

◦ Daraus resultiert die Anzahl der NxN AWGs.

◦ Daraus resultiert die Anzahl der OLAs.

- Die Anzahl der notwendigen TOR-OTN Komponenten in den Knoten:

◦ Daraus resultiert die Anzahl der NxN optischen Switchmatrizen.

◦ Daraus resultiert die Anzahl der DWDM Muliplexer/Demultiplexer.

◦ Daraus resultiert die Anzahl der Packet Cards für die Switch/Router, die die entsprechenden Transceiver Interfaces tragen, z.B. für 100 Gbit/s, 200 Gbit/s, 400 Gbit/s, 800 Gbit/s, etc.

◦ Daraus resultiert die Anzahl der DWDM Transceiver Interfaces für die Bitraten, z.B. 100 Gbit/s, 200 Gbit/s, 400 Gbit/s, 800 Gbit/s, etc.

Die Optimierung kann mit Hilfe von automatisch erhobenen und bereitgestellten, das heißt gemonitorten Eingangswerten per Zeitplanung automatisiert und per "Zero Touch" durchgeführt werden. Ergeben sich durch die Optimierung Unterschiede zum vorhandenen TOR-OTN Aufbau, dann kann die optimierte TOR-OTN Struktur entsprechend automatisiert und damit auch kurzfristig per "Zero Touch" umkonfiguriert werden.

Im Zusammengang mit der Bereitstellung einer zusätzlichen Verbindung, nämlich beispielsweise einer 100-Gbit/s-Verbindung, in einem OTN 1 könnte sich eine nahtlose In-Service-Umkonfiguration unter Bezug auf die Fig. 3 beispielsweise nach folgendem Ablauf vollziehen:

1. Die gemäß dieser Erfindung gestaltete TOR-OTN-Architektur ist für das OTN 1 im Kernbereich aufgebaut.

2. Es soll beispielsweise eine zusätzliche 100-Gbit/s-Verbindung zwischen dem Netzwerkknoten $2_1$ und dem Netzwerkknoten $2_3$ konfiguriert und in Betrieb genommen werden.

3. Es ist zu klären, dass in dem TOR-OTN Netzwerkknoten $2_1$ und in dem Netzwerkknoten $2_3$ je ab dem Switch/Router 4 ein Line-Port $5_1$, $5_2$, ..., $5_n$ mit bestückten 100-Gb/s-DWDM-Transpondern bereitsteht.

4. Ist die Suche nach einem freien Line-Port $5_1$, $5_2$, ..., $5_n$ in einem der Netzwerkknoten $2_1$, $2_3$ nicht erfolgreich, dann soll die Nachrüstung entsprechender Line-Ports $5_1$, $5_2$, ..., $5_n$ für diesen Netzwerkknoten $2_1$, $2_3$ angestoßen werden, wobei entsprechende Switch/Router-Line-Cards und entsprechende pluggable 100-Gbits-Transponder nachzurüsten sind.

5. Nach erfolgreicher Suche freier Line-Ports $5_1$, $5_2$, ..., $5_n$ oder Nachrüstung sind für die entsprechenden Line-Ports $5_1$, $5_2$, ..., $5_n$ der Switches/Router 4 in den Netzwerkknoten $2_1$, $2_3$ eine entsprechende freie optische Frequenz für die Verbindung zwischen den Netzwerkknoten $2_1$, $2_3$ einer Tabelle zu entnehmen, zu allokieren und an den entsprechenden Line-Ports Ports $5_1$, $5_2$, ..., $5_n$ der Switches/Router 4 einzustellen.

6. Ist keine Wellenlänge mehr verfügbar, dann ist eine mögliche Umkonfiguration einer bestehenden Verbindung auf eine höhere Bitrate, beispielsweise von 100 Gbit/s auf 200 Gbit/s oder höher, je nach Verfügbarkeit, zu prüfen und entsprechend umzukonfigurieren.

7. Ist eine Umkonfiguration auf eine höhere Bitrate nicht möglich, dann ist der Aufbau eines weiteren TOR-OTN-Kernnetzes entsprechend der TOR-Architektur anzustoßen und zu realisieren. Dieser Fall dürfte aber nicht eintreten, da der Ausbau des TOR-OTN-Kernbereichs bereits aufgrund des Verkehrswachstums erfolgt sein sollte.

8. Nach erfolgreicher Suche freier Line-Ports $5_1$, $5_2$, ..., $5_n$ oder Nachrüstung sowie der Allokierung der Wellenlänge sind die entsprechenden Line Ports $5_1$, $5_2$, ..., $5_n$ der Switches/Router 4 und Wellenlängen in den Netzwerkknoten $2_1$, $2_3$ als belegt im Management-System zu deklarieren.

9. Die entsprechenden optischen Leistungen für die Verbindung zwischen den Netzwerkknoten $2_1$ und $2_3$ sind einer Tabelle zu entnehmen und an den entsprechenden Line-Ports $5_1$, $5_2$, ..., $5_n$ der Switches/Router 4 einzustellen.

10. Die Durchschaltungen für die entsprechenden optischen Switch Matrizen inklusive der VOA Einstellungen in den Netzwerkknoten $2_1$ und $2_3$ sind einer Tabelle zu entnehmen und an den entsprechenden optischen Switchmatrizen 7, 7'einzustellen.

11. Es wird eine Probeverbindung hergestellt und durch die Monitorsysteme die Güte der Verbindung gemessen, zum Beispiel durch die Messung des elektrischen S/N Signal-zu-Rausch Abstands in den jeweiligen Empfängern der Transponder.

12. Es werden eventuelle Feinabstimmungen in den Transpondern bezüglich der optischen Leistungen und/oder der VOA in den optischen Switchmatrizen, beziehungsweise im Normalfall durch automatische Regelschleifen vorgenommen.

13. Es werden eventuelle Feinabstimmungen in den OLAs der entsprechenden Links von den Netzwerkknoten $2_1$ und $2_3$ zum NxN AWG 3 im TOR-OTN Sternpunkt S, beziehungsweise im Normalfall durch die entsprechenden automatischen Regelschleifen in den einzelnen OLAs vorgenommen.

14. Nach erfolgreicher Inbetriebnahme wird die Verbindung als In-Service an das Management System gemeldet, das heißt insbesondere in die Verbindungstabelle aufgenommen und die Überwachung der Verbindung sowie das Auslesen entsprechender Daten in Log-Dateien wird angestoßen.

15. Nach erfolgreicher Inbetriebnahme wird die neue Verbindung zwischen den Netzwerkknoten $2_1$ und $2_3$ durch das Management als In-Service deklariert und für den Packet-Verkehr auf Layer 2/3 freigeschaltet.

16. Damit ist die neue Verbindung per "Zero Touch" Konfiguration nahtlos und automatisiert in ein bestehendes OTN 1 integriert worden. Das Kern-TOR-OTN kann dabei auch parallel zu bereits bestehenden TOR-OTN-Netzwerken aufgebaut werden, die gegebenenfalls eine andere Architektur besitzen, zum Beispiel auch entsprechend dem Stand der Technik eine teilvermaschte Fasernetz-Topologie.

17. Der Prozess sollte für die redundanten TOR-OTN-Netzwerke beziehungsweise Verbindungen wiederholt werden, um eine Ausfallsicherheit zu gewährleisten.

Im Zusammengang mit der Abschaltung beispielsweise einer nicht mehr benötigten 100-Gbit/s-Verbindung in einem OTN 1 könnte sich eine nahtlose In-Service-Umkonfiguration beispielsweise nach folgendem Ablauf vollziehen:

1. Die gemäß dieser Erfindung gestaltete TOR-OTN-Architektur ist bereitsaufgebaut.

2. Es soll z.B. eine bestehende 100-Gbit/s-Verbindung zwischen dem Netzwerkknoten $2_1$ und dem Netzwerkknoten $2_3$ umkonfiguriert und abgeschaltet, das heißt außer Betrieb genommen werden.

3. Es ist zu klären, dass zwischen dem Netzwerkknoten $2_1$ und dem Netzwerkknoten $2_3$ genügend freie Übertragungskapazitäten bestehen, welche die derzeitige Kapazität durch das Abschalten der Verbindung zwischen dem Netzwerkknoten $2_1$ und dem Netzwerkknoten $2_3$ aufnehmen können.

4. Nach erfolgreicher Klärung der umzuschwenkenden Kapazitäten werden diese Kapazitäten durch das IP Management entsprechend auf andere Verbindungen umgeroutet, so dass kein Verkehr mehr über die zu entfernende Verbindung zwischen dem Netzwerkknoten $2_1$ und dem Netzwercknoten $2_3$ übertragen wird.

5. Dann wird die abzuschaltende Verbindung zwischen dem Netzwerkknoten $2_1$ und dem Netzwerkknoten $2_3$ durch das Management als "außer Betrieb" gesetzt.

6. Dann können eventuelle Überwachungsmaßnahmen für die zu löschende Verbindung aufgehoben werden.

7. Dann können entsprechende Einstellungen an den entsprechenden Line-Ports $5_1$, $5_2$, ..., $5_n$ der Switches/Router 4, zum Beispiel der optischen Frequenzen und der optischen Leistungen zurückgesetzt beziehungsweise abgeschaltet und freigegeben werden.

8. Dann können Einstellungen für die Durchschaltungen für die entsprechenden optischen Switchmatrizen 7, 7' inklusive der VOA Einstellungen in den Netzwerkknoten $2_1$ und $2_3$ zurückgesetzt und im Management System freigegeben werden.

9. Dann kann die Verbindung aus den Verkehrstabellen des Management für das TOR-OTN zurückgesetzt beziehungsweise gelöscht werden.

10. Dann können die entsprechenden Line-Ports $5_1$, $5_2$, ..., $5_n$ mit den 100-Gbit/s-Interfaces in den Netzwerkknoten $2_1$ und $2_3$ als frei für die weitere Verwendung deklariert werden, wobei die freigewordenen Line-Ports $5_1$, $5_2$, ..., $5_n$ der Switches/Router 4 sofort wieder anderweitig genutzt und konfiguriert werden können.

11. Damit wurde eine bestehende Verbindung per "Zero Touch" Konfiguration nahtlos und automatisiert in einem bestehenden OTN 1 beendet und zur weiteren Verwendung freigegeben.

12. Der Prozess sollte für die, wegen der Ausfallsicherheit bereitgestellten redundanten TOR-OTN-Netzwerke beziehungsweise Verbindungen wiederholt werden.

Durch die ganzheitliche TOR-OTN Optimierung können die Kosten für das TOR-OTN sowohl für das Capex (einmalige Investitionskosten) als auch für das Opex (laufende Betriebskosten) und insbesondere auch für beide zusammen auf absolut geringste Kosten minimiert werden.

Die Durchführung der Optimierung eines TOR-OTN gestaltet sich, wie es beispielhaft in der Fig. 5 gezeigt ist, hierbei folgendermaßen. Basis der Netzwerkoptimierung ist das Verkehrsaufkommen zwischen den Netzwerkknoten, das in Form einer "Origin Destination Matrix" (OD Matrix) beschrieben und durch Logfiles bereitgestellt wird.

Die Elemente der OD Matrix beschreiben Verkehrsbeziehungen zwischen den einzelnen Netzwerknoten (z.B. in TByte/Sekunde). Aufgrund der Symmetrie optischer Netzwerke - das heißt wird eine Kapazität in eine Richtung aufgebaut, so steht diese auch in Gegenrichtung zur Verfügung - ist die OD-Matrix eine symmetrische Matrix und lässt sich in einer Dreiecksform beschreiben. Die Hauptdiagonalelemente der OD-Matrix verschwinden, weil die interne Kommunikation der Netzwerkknoten nicht über das optische Netzwerk erfolgt.

Die beschriebene Netzwerkoptimierung beantwortet die Frage, wie die optimalen Kapazitäten und Adjazenzen des TOR-Netzwerkes zu planen sind, so dass die Ausbaukosten des gesamten TOR-OTN-Netzwerkes minimal sein müssen. Die Adjazenzen, also die direkten optischen Verbindungen zwischen den Netzwercknoten, und die Kapazitäten der optischen Verbindungen werden explizit offengelassen und sollen über die Optimierung berechnet werden.

Die Ausbaukosten für das TOR-OTN werden durch die Kosten der optischen Transponder/Transceiver und der Größe der Packet-Switches/IP-Router dominiert. Je mehr Transponder/Transceiver verbaut werden, desto kostenintensiver wird die Realisierung des Netzwerkes. Letztendlich müssen aber genügend optische Transponder/Transceiver und Switch/IP-Router verbaut werden, um die Verkehrslast des TOR-OTN realisieren zu können. Auch müssen genügend Transponder bereitgestellt werden, um über ein zweites physikalisches Netz, das heißt eine zweite (logische, respektive virtuelle, das heißt nicht zwingend physische) Plane des Netzwerks, Ausfallsicherheit bewerkstelligen zu können.

Die Netzwerkkosten im TOR-OTN Kern-Netzwerkbereich werden durch folgende Elemente bestimmt, wobei deren Anzahl zu minimieren ist:

- Die Anzahl der OLA Verstärker, denn jede optische Verbindung benötigt eine dedizierte Anzahl von Verstärkern.
- Die Anzahl der NxN AWG entsprechend der (logischen) Planes und damit der Anzahl der Sternpunkte.

Die Netzwerkkosten im TOR-OTN Rand-Netzwerkbereich, in den Netzwerkknoten, werden durch folgende Elemente bestimmt, wobei deren Anzahl zu minimieren ist:

- Die Switch/Router-Cards, die die entsprechenden Transceiver Interfaces, respektive Transponder, tragen, zum Beispiel für 100 Gbit/s, 200 Gbit/s, 400 Gbit/s, 800 Gbit/s, etc.
- Die DWDM pluggable Transceiver Interfaces für die Bitraten, beispielsweise für 100 Gbit/s, 200 Gbit/s, 400 Gbit/s, 800 Gbit/s, etc.
- Kosten für die NxN optischen Switchmatrizen, inklusive VOA (Variable Optical Attenuator) und Monitoring der optischen Leistungen pro Switch-Pfad.
- Kosten für die passiven DWDM Multiplexer/Demultiplexer (MUX/DEMUX).

Die Position der physisch zentralen Knoten des TOR Netzwerkes, also die Position der NxN AWGs in den einzelnen Planes, sollte so gewählt werden, dass die Latenz der optischen Verbindungen aller Knoten zueinander minimal wird. Abhängig von der angenommenen Anzahl der zentralen Knoten wird jeder Netzwerkknoten als zentraler Knoten angenommen und dann die Latenz aller Knoten zueinander berechnet. Die Konfiguration mit der niedrigsten Gesamtlatenz aller Verbindungen wird für einen nicht genutzten Sternpunkt ausgewählt. Die Berechnung erfolgt mit polynominaler Komplexität und lässt sich auf handelsüblichen Computern durchführen.

In der Praxis wird man eine Konfiguration mit mindestens zwei zentralen Knoten wählen, um eine ausfallsichere Lösung zu realisieren. In diesem Fall kann zumindest ein zentraler Knoten ausfallen und das Netzwerk dennoch seinen Dienst erbringen, sofern die Kapazität des restlichen redundanten optischen Fasernetzes ausreichend groß geplant wurde.

Im Folgenden wird ein klassischer Annealing Ansatz als ein Beispiel zur Lösung des Optimierungsproblems beschrieben. Als Kostenfunktion wird die Summe aller Transponder, die direkte optische Links an den Netzwerkknoten terminieren, verwendet. Die Anzahl der Transponder mit einer Bandbreite von z.B. 100 Gbit/s wird von den Werten der OD-Matrix bestimmt. Eine kleinere Anzahl der Transponder übersetzt sich in niedrigere Ausbaukosten und somit in ein besseres Ergebnis.

Ausgehend von einer Vollvermaschung des Netzwerkes (und der damit notwendigen Anzahl von Transpondern) wird das Netzwerk in weiteren Schritten zufällig variiert. Variation bedeutet hier der zufällige Wegfall und das zufällige Zufügen von direkten optischen Verbindungen im Netzwerk. Erbringt die Variation niedrigere Ausbaukosten, das heißt ein geringeren Wert der Kostenfunktion, so wird die Variation besser bewertet als in der Situation zuvor. Wird kein besserer Wert durch Variation gefunden, so besteht auch die Möglichkeit ein schlechteres Ergebnis zu übernehmen. Dieser Fall wird über eine temperaturabhängige Boltzmann Wahrscheinlichkeitsverteilung bewertet, das heißt die Wahrscheinlichkeit einer Verschlechterung hängt von einem Temperaturwert des Algorithmus ab.

Die Temperatur des gesamten Systems kühlt sich über die Laufzeit des Algorithmus ab, so dass temporäre Verschlechterungen über die Laufzeit des Algorithmus immer unwahrscheinlicher werden. Somit konvergiert der Algorithmus über den Temperaturwert - alternativ kann er über ein Abbruchkriterium beendet werden.

Tabelle 1a

| N Anzahl Netzwerkknoten | V Anzahl bidirektionaler Verbindungen | B Bandbreite [GHz] | CH Kanalbandbreite [GHz] | M Anzahl Kanäle pro Band | K Anzahl Netzwerk-Wellenlängen-Kanäle | SE Spektrale Effizienz [Bit/s/Hz] | Kapazität pro Kanal [Gbit/s] | Kapazität der Verbindung Knoten zu Knoten [Tbit/s] | Kapazität Netzwerk [Tbit/s] |
|---|---|---|---|---|---|---|---|---|---|
| 8 | 28 | 600 | 50 | 12 | 96 | 2 | 100 | 1,2 | 33,6 |
| 8 | 28 | 600 | 50 | 12 | 96 | 4 | 200 | 2,4 | 67,2 |
| 8 | 28 | 600 | 50 | 12 | 96 | 6 | 300 | 3,6 | 101,8 |
| 8 | 28 | 600 | 50 | 12 | 96 | 8 | 400 | 4,8 | 134,4 |
| 8 | 28 | 600 | 75 | 8 | 64 | 6 | 450 | 3,6 | 100,8 |
| 8 | 28 | 600 | 75 | 8 | 64 | 8 | 600 | 4,8 | 134,4 |
| 8 | 28 | 600 | 75 | 8 | 64 | 10 | 750 | 6,0 | 168,0 |
| 8 | 28 | 600 | 100 | 6 | 48 | 10 | 1.000 | 6,0 | 168,0 |
| 8 | 28 | 600 | 100 | 6 | 48 | 12 | 1.200 | 7,2 | 201,6 |
| 12 | 66 | 400 | 50 | 8 | 96 | 2 | 100 | 0,8 | 52,8 |
| 12 | 66 | 400 | 50 | 8 | 96 | 4 | 200 | 1,6 | 105,6 |
| 12 | 66 | 400 | 50 | 8 | 96 | 6 | 300 | 2,4 | 158,4 |
| 12 | 66 | 400 | 50 | 8 | 96 | 8 | 400 | 3,2 | 211,2 |
| 12 | 66 | 400 | 100 | 4 | 48 | 8 | 800 | 3,2 | 211,2 |
| 12 | 66 | 400 | 100 | 4 | 48 | 10 | 1.000 | 4,0 | 264,0 |
| 12 | 66 | 400 | 100 | 4 | 48 | 12 | 1.200 | 4,8 | 316,8 |
| 16 | 120 | 300 | 50 | 6 | 96 | 2 | 100 | 0,6 | 72,0 |
| 16 | 120 | 300 | 50 | 6 | 96 | 4 | 200 | 1,2 | 144,0 |
| 16 | 120 | 300 | 50 | 6 | 96 | 6 | 300 | 1,8 | 216,0 |
| 16 | 120 | 300 | 50 | 6 | 96 | 8 | 400 | 2,4 | 288,0 |
| 16 | 120 | 300 | 75 | 4 | 64 | 6 | 450 | 1,8 | 216,0 |
| 16 | 120 | 300 | 75 | 4 | 64 | 8 | 600 | 2,4 | 288,0 |
| 16 | 120 | 300 | 75 | 4 | 64 | 10 | 750 | 3,0 | 360,0 |

(fortgesetzt)

| N Anzahl Netzwerkknoten | V Anzahl bidirektionaler Verbindungen | B Bandbreite [GHz] | CH Kanalbandbreite [GHz] | M Anzahl Kanäle pro Band | K Anzahl Netzwerk-Wellenlängen-Kanäle | SE Spektrale Effizienz [Bit/s/Hz] | Kapazität pro Kanal [Gbit/s] | Kapazität der Verbindung Knoten zu Knoten [Tbit/s] | Kapazität Netzwerk [Tbit/s] |
|---|---|---|---|---|---|---|---|---|---|
| 16 | 120 | 300 | 100 | 3 | 48 | 8 | 800 | 2,4 | 288,0 |
| 16 | 120 | 300 | 100 | 3 | 48 | 10 | 1.000 | 3,0 | 360,0 |
| 16 | 120 | 300 | 100 | 3 | 48 | 12 | 1.200 | 3,6 | 432,0 |

Tabelle 1b

| N Anzahl Netzwerkknoten | V Anzahl bidirektionaler Verbindungen | B Bandbreite [GHz] | CH Kanalbandbreite [GHz] | M Anzahl Kanäle pro Band | K Anzahl Netzwerk-Wellenlängen-Kanäle | SE Spektrale Effizienz [Bit/s/Hz] | Kapazität pro Kanal [Gbit/s] | Kapazität der Verbindung Knoten zu Knoten [Tbit/s] | Kapazität Netzwerk [Tbit/s] |
|---|---|---|---|---|---|---|---|---|---|
| 24 | 276 | 200 | 50 | 4 | 96 | 2 | 100 | 0,4 | 110,4 |
| 24 | 276 | 200 | 50 | 4 | 96 | 4 | 200 | 0,8 | 220,8 |
| 24 | 276 | 200 | 50 | 4 | 96 | 6 | 300 | 1,2 | 331,2 |
| 24 | 276 | 200 | 50 | 4 | 96 | 8 | 400 | 1,6 | 441,6 |
| 24 | 276 | 200 | 100 | 2 | 48 | 8 | 0,8 | 1,6 | 441,6 |
| 24 | 276 | 200 | 100 | 2 | 48 | 10 | 1,0 | 2,0 | 552,0 |
| 24 | 276 | 200 | 100 | 2 | 48 | 12 | 1,2 | 2,4 | 662,4 |
| 32 | 496 | 150 | 50 | 3 | 96 | 2 | 100 | 0,3 | 148,8 |
| 32 | 496 | 150 | 50 | 3 | 96 | 4 | 200 | 0,6 | 297,6 |
| 32 | 496 | 150 | 50 | 3 | 96 | 6 | 300 | 0,9 | 446,4 |
| 32 | 496 | 150 | 50 | 3 | 96 | 8 | 400 | 1,2 | 595,2 |
| 32 | 496 | 150 | 75 | 2 | 64 | 6 | 450 | 0,9 | 446,4 |
| 32 | 496 | 150 | 75 | 2 | 64 | 8 | 600 | 1,2 | 595,2 |
| 32 | 496 | 150 | 75 | 2 | 64 | 10 | 750 | 1,5 | 744,0 |
| 48 | 1.128 | 100 | 50 | 2 | 96 | 2 | 100 | 0,2 | 225,6 |
| 48 | 1.128 | 100 | 50 | 2 | 96 | 4 | 200 | 0,4 | 451,2 |
| 48 | 1.128 | 100 | 50 | 2 | 96 | 6 | 300 | 0,6 | 676,8 |
| 48 | 1.128 | 100 | 50 | 2 | 96 | 8 | 400 | 0,8 | 902,4 |
| 48 | 1.128 | 100 | 100 | 1 | 48 | 8 | 800 | 0,8 | 902,4 |
| 48 | 1.128 | 100 | 100 | 1 | 48 | 10 | 1.000 | 1,0 | 1,128 |
| 48 | 1.128 | 100 | 100 | 1 | 48 | 12 | 1.200 | 1,2 | 1.353,6 |
| 96 | 4.560 | 50 | 50 | 1 | 96 | 2 | 100 | 0,1 | 456,0 |
| 96 | 4.560 | 50 | 50 | 1 | 96 | 4 | 200 | 0,2 | 912,0 |

(fortgesetzt)

| N Anzahl Netzwerkknoten | V Anzahl bidirektionaler Verbindungen | B Bandbreite [GHz] | CH Kanalbandbreite [GHz] | M Anzahl Kanäle pro Band | K Anzahl Netzwerk-Wellenlängen-Kanäle | SE Spektrale Effizienz [Bit/s/Hz] | Kapazität pro Kanal [Gbit/s] | Kapazität der Verbindung Knoten zu Knoten [Tbit/s] | Kapazität Netzwerk [Tbit/s] |
|---|---|---|---|---|---|---|---|---|---|
| 96 | 4.560 | 50 | 50 | 1 | 96 | 6 | 300 | 0,3 | 1.368,0 |
| 96 | 4.560 | 50 | 50 | 1 | 96 | 8 | 400 | 0,4 | 1.824,0 |

Tabelle 2

| N Anzahl Netzwerkknoten | V Anzahl bidirektionaler Verbindungen | B Bandbreite [GHz] | CH Kanalbandbreite [GHz] | M Anzahl Kanäle pro Band | K Anzahl Netzwerk-Wellenlängen-Kanäle | SE Spektrale Effizienz [Bit/s/Hz] | Kapazität pro Kanal [Gbit/s] | Kapazität der Verbindung Knoten zu Knoten [Tbit/s] | Kapazität Netzwerk [Tbit/s] |
|---|---|---|---|---|---|---|---|---|---|
| 8 | 28 | 600 | 25 | 24 | 192 | 4 | 100 | 2,4 | 67,2 |
| 8 | 28 | 600 | 12,5 | 48 | 384 | 8 | 100 | 4,8 | 134,4 |
| 12 | 66 | 400 | 25 | 16 | 192 | 4 | 100 | 1,6 | 105,6 |
| 12 | 66 | 400 | 12,5 | 32 | 384 | 8 | 100 | 3,2 | 211,2 |
| 16 | 120 | 300 | 25 | 12 | 192 | 4 | 100 | 1,2 | 144,0 |
| 16 | 120 | 300 | 12,5 | 24 | 384 | 8 | 100 | 2,4 | 288,0 |
| 24 | 276 | 200 | 25 | 8 | 192 | 4 | 100 | 0,8 | 220,8 |
| 24 | 276 | 200 | 12,5 | 16 | 384 | 8 | 100 | 1,6 | 441,6 |
| 32 | 496 | 150 | 25 | 6 | 192 | 4 | 100 | 0,6 | 297,6 |
| 32 | 496 | 150 | 12,5 | 12 | 384 | 8 | 100 | 1,2 | 595,2 |
| 48 | 1.128 | 100 | 25 | 4 | 192 | 4 | 100 | 0,4 | 451,2 |
| 48 | 1.128 | 100 | 12,5 | 2 | 384 | 8 | 100 | 0,8 | 902,4 |
| 96 | 4.560 | 50 | 25 | 2 | 192 | 4 | 100 | 0,2 | 912,0 |
| 96 | 4.560 | 50 | 12,5 | 4 | 384 | 8 | 100 | 0,4 | 1.824,0 |

**Patentansprüche**

1. Verfahren zur Flexibilisierung eines mehrere Netzwerkknoten ($2_1$, $2_2$, ..., $2_n$) mit jeweils einem, über mehrere Line-Ports ($5_1$, $5_2$, ..., $5_n$) verfügenden IP-Router oder Switch (4) und ein Netzwerkmanagement aufweisenden optischen Transport-Netzwerks OTN (1), in welchem Daten zwischen den Netzwerkknoten ($2_1$, $2_2$, ..., $2_n$) in unterschiedlichen, durch optische Transponder oder optische Transceiver der Line-Ports ($5_1$, $5_2$, ..., $5_n$) ihrer IP-Router/Switches (4) bereitgestellten Übertragungskanälen mittels eines AWG (3), nämlich eines passiven NxN Arrayed Waveguide Grating, durch transparentes optisches Routing TOR jeweils Ende-zu-Ende optisch transparent übertragen werden, wobei die Daten zwischen dem AWG (3) und einem jeweiligen Netzwerkknoten ($2_1$, $2_2$, ..., $2_n$) jeweils über einen, mehrere Ports aufweisenden optischen Multiplexer/Demultiplexer MUX/DEMUX (6) übertragen werden, **dadurch gekennzeichnet, dass** das Netzwerkmanagement mit einer Software ausgestattet wird, mittels welcher das OTN (1) ohne Veränderungen seiner physischen Topologie rekonfigurierbar und optimierbar ist, indem bei Ausführung der Software durch diese

   a.) für jeden Netzwerkknoten ($2_1$, $2_2$, ..., $2_n$) jeweils die in der Upstream-Richtung zur Aussendung von Daten an andere Netzwerkknoten ($2_1$, $2_2$, ..., $2_n$) sowie die in der Downstream-Richtung zum Empfang von Daten anderer Netzwerkknoten ($2_1$, $2_2$, ..., $2_n$) zu verwendenden Transponder/Transceiver des IP-Routers/Switches (4) ausgewählt werden,
   b.) eine dazu ausgebildete, zwischen dem IP-Router/Switch (4) eines jeweiligen Netzwerkknotens ($2_1$, $2_2$, ..., $2_n$) und dem MUX/DEMUX (6) eingefügte Netzelemente, nämlich eine NxN optische Switchmatrix (7, 7') je Übertragungsrichtung, dazu angesteuert wird, sowohl in der Upstream-Richtung als auch in der Downstream-Richtung die Transponder/Transceiver der Line-Ports (51, 52, ..., 5n) jeweils mit dem, in Bezug auf das von ihm unterstützte Frequenzband, richtigen Port des MUX/DEMUX (6) zu verbinden.

2. Verfahren nach Anspruch 1, **dadurch gekennzeichnet, dass** das OTN (1) mittels der vom Netzwerkmanagement ausgeführten Software, durch eine entsprechende Ansteuerung der Transponder/Transceiver der IP-Router/Switches (4) von Netzwerkknoten ($2_1$, $2_2$, ..., $2_n$) des OTN (1) und des die Transponder/Transceiver mit den Ports des MUX/DEMUX (6) verbindenden Netzelements, das heißt der je Übertragungsrichtung vorgesehenen optischen Switchmatrix (7, 7'), basierend auf einem dafür in den Einheiten des Netzwerkmanagements gehaltenen Regelwerk, in einem automatisierten Prozess rekonfiguriert und/oder optimiert wird.

3. Verfahren nach Anspruch 1 oder 2, **dadurch gekennzeichnet, dass** das OTN (1) softwaregesteuert entsprechend der für die Datenübertragung zwischen einzelnen Netzwerkknoten ($2_1$, $2_2$, ..., $2_n$) des OTN (1) benötigten Übertragungsbandbreite optimiert wird.

4. Verfahren nach einem der Ansprüche 1 bis 3, **dadurch gekennzeichnet, dass** das OTN (1) softwaregesteuert hinsichtlich der für die Datenübertragung zwischen einzelnen Netzwerkknoten ($2_1$, $2_2$, ..., $2_n$) des OTN (1) bestehenden Anforderungen an die Latency optimiert wird.

5. Verfahren nach einem der Ansprüche 1 bis 4, **dadurch gekennzeichnet, dass** das OTN (1) softwaregesteuert unter Kostengesichtspunkten optimiert wird.

6. Verfahren nach einem der Ansprüche 1 bis 5, **dadurch gekennzeichnet, dass** das Netzelement, welches die Transponder/Transceiver des IP-Routers/Switches (4) eines Netzwerkknotens ($2_1$, $2_2$, ..., $2_n$) entsprechend der Ansteuerung durch die Software mit einem jeweiligen Port des MUX/DEMUX verbindet, also die je Übertragungsrichtung vorgesehene optische Switchmatrix (7, 7'), von der Software hinsichtlich der korrekten Ausführung der dazu durch die Software vorgegebenen optischen Schaltvorgänge gemonitort wird.

7. Kommunikationsnetz, welches ausgebildet ist als ein optisches Transport-Netzwerk OTN (1) mit mehreren, jeweils über mindestens einen IP-Router oder Switch (4) mit mehreren Line-Ports ($5_1$, $5_2$, ..., $5_n$) verfügenden Netzwerckknoten ($2_1$, $2_2$, ..., $2_n$) und mit einem Netzwerkmanagement, wobei

   - die Line-Ports ($5_1$, $5_2$, ..., $5_n$) der IP-Router/Switches (4) der Netzwerckknoten ($2_1$, $2_2$, ..., $2_n$) jeweils mehrere, Übertragungskanäle für Daten bereitstellende optische Transponder oder optische Transceiver aufweisen und
   - Bestandteil des OTN (1) ein AWG (3), nämlich ein NxN Arrayed Waveguide Grating ist, mittels welchem Daten zwischen den Netzwerkknoten ($2_1$, $2_2$, ..., $2_n$) durch transparentes optisches Routing TOR jeweils Ende-zu-Ende optisch transparent übertragen werden und
   - jeder Netzwerkknoten ($2_1$, $2_2$, ..., $2_n$) mit dem AWG (3) jeweils über einen optischen Multiplexer/Demultiplexer MUX/DEMUX (6) verbunden ist, welcher mehrere Ports zur Verbindung mit je einem optischen Transponder/Transceiver der Line-Ports ($5_1$, $5_2$, ..., $5_n$) des mindestens einen IP-Routers/Switches (4) des Netzwerkknotens ($2_1$, $2_2$, ..., $2_n$) aufweist,
**dadurch gekennzeichnet, dass**

a.) zwischen den optischen Transpondern/Transceivern der Line-Ports ($5_1$, $5_2$, ..., $5_n$) des mindestens einen IP-Routers/Switches (4) eines jeden der Netzwerkknoten ($2_1$, $2_2$, ..., $2_n$) und dem MUX/DEMUX (6), über welchen Daten zwischen dem AWG (3) und dem jeweiligen Netzwerkknoten ($2_1$, $2_2$, ..., $2_n$) übertragen werden, je Übertragungsrichtung ein zusätzliches Netzelement, nämlich eine NxN optische Switchmatrix (7, 7') angeordnet ist und

b.) das Netzwerkmanagement mit einer Software ausgestattet ist, mittels welcher das OTN (1) ohne Veränderungen seiner physischen Topologie rekonfigurierbar und optimierbar ist, indem die Software dazu eingerichtet ist, bei ihrer Ausführung

(i.) für jeden Netzwerkknoten ($2_1$, $2_2$, ..., $2_n$) jeweils die in der Upstream-Richtung zur Aussendung von Daten an andere Netzwercknoten ($2_1$, $2_2$, ..., $2_n$) sowie der in der Downstream-Richtung zum Empfang von Daten anderer Netzwerkknoten zu ($2_1$, $2_2$, ..., $2_n$) verwendenden Transponder/Transceiver des mindestens einen IP-Routers/Switches (4) auszuwählen,

(ii.) für jeden Netzwerkknoten ($2_1$, $2_2$, ..., $2_n$) die zwischen dem mindestens einen IP-Router/Switch (4) und dem MUX/DEMUX (6) je Übertragungsrichtung angeordnete NxN optische Switchmatrix (7, 7') dazu anzusteuern, die optischen Transponder/Transceiver der Line-Ports ($5_1$, $5_2$, ..., $5_n$) sowohl in der Upstream-Richtung als auch in der Downstream-Richtung jeweils mit dem, in Bezug auf das von ihm unterstützte Frequenzband, richtigen Port des MUX/DEMUX (6) zu verbinden.

8. OTN (1) nach Anspruch 7, **dadurch gekennzeichnet, dass** das OTN (1) als Sternnetz ausgebildet ist, wobei das AWG (3) im Sternpunkt S angeordnet ist.

9. OTN (1) nach Anspruch 7 oder 8, **dadurch gekennzeichnet, dass** das AWG (3) in einem der Netzwerkknoten ($2_1$, $2_2$, ..., $2_n$) des OTN (1) angeordnet ist.

10. OTN nach einem der Ansprüche 7 bis 9, **dadurch gekennzeichnet, dass** die je Übertragungsrichtung vorgesehene, die Transponder/Transceiver der Line-Ports ($5_1$, $5_2$, ..., $5_n$) des IP-Routers/Switches (4) eines Netzwerkknotens ($2_1$, $2_2$, ..., $2_n$) mit den Ports des MUX/DEMUX verbindende NxN optische Switchmatrix (7, 7') innerhalb des Netzwerkknotens ($2_1$, $2_2$, ..., $2_n$) angeordnet ist.

11. OTN nach Anspruch 10, **dadurch gekennzeichnet, dass** auch der optische MUX/DEMUX (6) innerhalb des Netzwerkknotens ($2_1$, $2_2$, ..., $2_n$) angeordnet ist.

$2_n$

$5_1$   6   7   7´   4   $5_n$

Netzwerk Knoten N

Port 01   Router / Switch   Port 96

Tx | Rx   • • •   Tx | Rx

Network
Management
Control

Switch / Router
Wavelengths &
Optical Power
per Port

• • •

01   96
96x96 Optical Switch Matrix
01   96

01   96
96x96 Optical Switch Matrix
01   96

Optical Switch
Matrix

• • •   • • •

• • •   • • •

01   96
Multiplexer 50 GHz

96 Channel
DWDM Mux/Demux

01   96
Demultiplexer 50 GHz

DWDM
Mux/Demux

Optical Line Amplifier (OLA)

OLA

Standard Single Mode Fasern zum optischen Transport Network

8

## Fig. 1

Komponenten im Netzknoten am Transport-Netzwerk-Rand

Sternpunkt S mit NxN AWG

3

Standard Singlemode Glasfasern (SSMF)

Quasi passives Kern-Transport-Netzwerk

Physikalisch optisch transparente DWDM-Verbindungen

1

OTN Kernnetz

Bidirektionaler OLA

Optischer MUX/DEMUX

Optische Switchmatrix

6

7'

Komponenten im Netzknoten am Transport-Netzwerk-Rand

Netzwerkknoten

Transmitter TX

Receiver RX

2n

7

5n

4

**Fig. 2**

**Fig. 3**

EP 4 007 293 A1

in    out

12x12

passives
AWG

N1i

N12i

f₁ f₂ f₃ f₄ f₅ f₆ f₇ f₈ f₉ f₁₀ f₁₁ f₁₂

Optische Frequenz

N1o

N12o

f₁ f₂ f₃ f₄ f₅ f₆ f₇ f₈ f₉ f₁₀ f₁₁ f₁₂

Optische Frequenz

Fig. 4

**Fig. 5**

Europäisches
Patentamt

European
Patent Office

Office européen
des brevets

**EUROPÄISCHER RECHERCHENBERICHT**

Nummer der Anmeldung

EP 20 20 9835

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 594 241 A1 (NIPPON TELEGRAPH & TELEPHONE [JP]) 9. November 2005 (2005-11-09) * Spalte 4, Absatz 18 - Spalte 5, Absatz 20 * * Spalte 44, Absatz 131 - Spalte 46, Absatz 141 * * Spalte 52, Absatz 164 - Spalte 55, Absatz 178 * * Spalte 69, Absatz 254 - Spalte 77, Absatz 278 * * Spalte 117, Absatz 439 - Spalte 121, Absatz 455 * * Abbildungen 1-1 - 1-4, 1-6, 1-19, 1-24,3-1 - 3-10, 4-10 - 4-25 * ----- | 1-11 | INV. H04Q11/00 H04L12/24 |
| A | EP 2 963 871 A1 (DEUTSCHE TELEKOM AG [DE]) 6. Januar 2016 (2016-01-06) * Seite 2, Absatz 1 - Absätze 2,7 * * Seite 3, Absatz 12 - Seite 4, Absatz 24 * * Seite 5, Absatz 32 - Absatz 36 * * Seite 7, Absatz 56 - Absatz 60 * * Seite 8, Absatz 66 - Absatz 68 * * Seite 9, Absatz 84 * * Seite 14, Absatz 104 - Seite 15, Absatz 117 * * Abbildungen 3,5,7,10-11 * ----- | 1-11 | **RECHERCHIERTE SACHGEBIETE (IPC)** H04Q H04J H04L |
| A | BISWANATH MUKHERJEE ET AL: "Some principles for designing a wide-area WDM optical network", IEEE /ACM TRANSACTIONS ON NETWORKING, IEEE / ACM, NEW YORK, NY, US, Bd. 4, Nr. 5, 1. Oktober 1996 (1996-10-01) , Seiten 684-696, XP058108190, ISSN: 1063-6692, DOI: 10.1109/90.541317 * das ganze Dokument * ----- | 1-11 | |

Der vorliegende Recherchenbericht wurde für alle Patentansprüche erstellt

| Recherchenort | Abschlußdatum der Recherche | Prüfer |
|---|---|---|
| München | 12. Mai 2021 | Carballo da Costa, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 9835

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-05-2021

| Im Recherchenbericht angeführtes Patentdokument | Datum der Veröffentlichung | Mitglied(er) der Patentfamilie | Datum der Veröffentlichung |
|---|---|---|---|
| EP 1594241 A1 | 09-11-2005 | CN 1745529 A | 08-03-2006 |
| | | EP 1594241 A1 | 09-11-2005 |
| | | JP 3853834 B2 | 06-12-2006 |
| | | JP WO2004073225 A1 | 01-06-2006 |
| | | US 2006153496 A1 | 13-07-2006 |
| | | WO 2004073225 A1 | 26-08-2004 |
| EP 2963871 A1 | 06-01-2016 | EP 2963871 A1 | 06-01-2016 |
| | | US 2015382088 A1 | 31-12-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013164044 A1